(19) Europäisches Patentamt
European Patent Office
Office européen des brevets

(11) **EP 0 825 481 B1**

(12) **EUROPÄISCHE PATENTSCHRIFT**

(45) Veröffentlichungstag und Bekanntmachung des Hinweises auf die Patenterteilung:
**18.12.2002   Patentblatt 2002/51**

(51) Int Cl.$^7$: **G03B 27/73**, H04N 1/60

(21) Anmeldenummer: **96810554.4**

(22) Anmeldetag: **21.08.1996**

(54) **Verfahren zum Erstellen fotografischer Kopien von fotografischen Kopiervorlagen**

Process for making photographic copies from photographic originals

Procédé pour la production de copies photographiques à partir d'originaux photographiques

(84) Benannte Vertragsstaaten:
**CH DE FR GB IT LI**

(43) Veröffentlichungstag der Anmeldung:
**25.02.1998   Patentblatt 1998/09**

(73) Patentinhaber: **GRETAG IMAGING AG**
**8105 Regensdorf (CH)**

(72) Erfinder:
• **Kraft, Walter**
**8049 Zürich (CH)**
• **Zolliker, Peter**
**8157 Dielsdorf (CH)**

(74) Vertreter: **Schwabe - Sandmair - Marx**
**Stuntzstrasse 16**
**81677 München (DE)**

(56) Entgegenhaltungen:
**EP-A- 0 475 897          US-A- 5 333 069**

• **PATENT ABSTRACTS OF JAPAN vol. 018, no. 124 (E-1517), 28.Februar 1994 & JP 05 316351 A (MINOLTA CAMERA CO LTD), 26.November 1993, & JP 05 316 351 A**

**Beschreibung**

Die Erfindung betrifft ein Verfahren zum Erstellen fotografischer Kopien von fotografischen Kopiervorlagen gemäss dem Oberbegriff des unabhängigen Patentanspruchs.

Die Erstellung fotografischer Kopien von fotografischen Kopiervorlagen erfolgt typischerweise mittels fotografischer Kopiergeräte (Printer), in denen die Kopiervorlagen mit Kopierlicht beaufschlagt und auf fotografisches Kopiermaterial aufbelichtet werden. In einem in der Praxis sehr häufigen Fall handelt es sich bei dem Kopiervorlagenmaterial um belichtete Negativfilmstreifen, auf denen sich Bildfelder als Kopiervorlagen befinden, und bei dem Kopiermaterial um Fotopapier, auf dem die Papierbilder als fotografische Kopien erstellt werden. Im folgenden wird der Einfachheit halber mit beispielhaftem Charakter auf diesen Fall Bezug genommen, d. h. die Negativfilme bzw. die auf ihnen befindlichen Bildfelder stehen als repräsentatives Beispiel für Kopiervorlagenmaterial bzw. Kopiervorlagen und das Fotopapier bzw. die Papierbilder stehen als repräsentatives Beispiel für fotografisches Kopiermaterial bzw. fotografische Kopien. Natürlich können z.B. auch Diapositive als Kopiervorlagen dienen und Folien als fotografische Kopien.

Kunden, die ihre belichteten Negativfilme zur Erstellung von Papierbildern in Auftrag geben, erwarten in zunehmendem Masse immer kürzere Bearbeitungszeiten für ihre Aufträge, stellen aber gleichzeitig sehr hohe Anforderungen an die Qualität der Papierbilder. Deshalb werden insbesondere in Grosslabors heutzutage zur Erstellung der fotografischen Kopien Hochleistungsprinter eingesetzt, die für sehr hohe Durchsatzraten ausgelegt sind. Um einen möglichst effizienten und lückenlosen Betrieb und damit eine möglichst optimale Kapazitätsauslastung und wirtschaftliche Arbeitsweise des Printers zu gewährleisten, werden die einzelnen Negativfilmstreifen dem Hochleistungsprinter typischerweise in Form eines zusammengespleissten Filmbandes zugeführt. Dazu wird eine grosse Anzahl von Negativfilmstreifen zu einem langen, zusammenhängenden Filmband gespleisst, welches beispielsweise zu einer Rolle aufgewickelt wird. Von einer solchen Rolle wird dann das Filmband in das Kopiergerät - den Printer - eingespeist, wo die Aufbelichtung der Bildfelder auf das noch unbelichtete Fotopapier erfolgt, welches dem Printer typischerweise in Form eines Papierbandes zugeführt wird. In der Folge wird dann das Filmband in kurze Streifen - üblicherweise à vier Bildfelder - geschnitten. Das belichtete Fotopapierband wird in einem Kopiermaterialprozessor, beispielsweise einem Papierprozessor, entwickelt, und anschliessend werden die einzelnen Papierbilder auf dem Fotopapierband geschnitten. Schliesslich werden die Negativfilmstreifen und die zugehörigen Papierbilder nach Aufträgen geordnet und in Taschen verpackt.

Normalerweise kann in fotografischen Kopiergeräten (Printern) nicht mit standardisierten, einheitlichen Kopierlichtmengen gearbeitet werden, sondern es werden Belichtungssteuerungsverfahren eingesetzt, bei denen die möglichst optimalen Kopierlichtmengen, insbesondere die Belichtungszeiten für die drei Grundfarben Blau, Grün, Rot, für die einzelnen Bildfelder bestimmt werden. Hierbei müssen sowohl die spezifischen Eigenschaften des Kopiermaterials (Fotopapier) als auch die filmspezifischen Eigenschaften und die Eigenschaften des Bildfeldes berücksichtigt werden. Solche Belichtungssteuerungsverfahren werden beispielsweise im Rahmen der EP-A-0,475,897 und der EP-A-0,586,773 offenbart.

Typischerweise werden bei solchen Belichtungssteuerungsverfahren die individuellen Bildfelder der Negativfilme analysiert, indem in einer Messstation des Kopiergeräts zunächst das zu kopierende Bildfeld des Negativfilms bereichsweise, bevorzugt punktweise, mit Hilfe von Messlicht abgetastet wird. Das von jedem Abtastbereich eines Bildfelds des Negativfilms transmittierte oder remittierte Messlicht wird einer Detektoranordnung zugeführt, spektral zerlegt und in wellenlängen- und intensitätsabhängige elektrische Messignale umgesetzt. Die elektrischen Messignale werden anschliessend digitalisiert und mit ihrer Hilfe werden bildfeldspezifische Daten ermittelt. Mit Hilfe der gewonnenen Daten werden dann die erforderlichen Kopierlichtmengen ermittelt.

Damit die in den jeweiligen Farben Blau, Grün, Rot erforderlichen Kopierlichtmengen richtig ermittelt werden können, muss einerseits bekannt sein, wie ein bestimmtes Fotopapier auf Änderungen in den jeweiligen Farben des Kopierlichts reagiert, wie sich also die Papierdichte über die Konzentration der Farbstoffe Gelb, Magenta, Cyan ändert in Abhängigkeit von einer Änderung des Kopierlichts in den Farben Blau, Grün, Rot. Es muss mithin ein Modell für das Fotopapier - ein Papiermodell - bekannt sein, welches repräsentativ für die Absorptionseigenschaften des Fotopapiers bei Änderung der Belichtung ist. Dieses Papiermodell muss natürlich auch die Nebenabsorptionen des Fotopapiers berücksichtigen. Nebenabsorption bedeutet, dass aus einer Beaufschlagung des Fotopapiers mit Licht einer Farbe, z. B. blauem Licht, eine Veränderung der optischen Dichte des Fotopapiers in allen drei Farben resultiert.

Andererseits muss auch ein Modell dafür bekannt sein, wie das Fotopapier auf Änderungen der spektralen Filmdichte des Negativfilms reagiert, damit bestimmbar ist, wie das Kopierlicht (Belichtung) geändert werden muss, um Abweichungen der tatsächlich gemessenen Dichte eines Negativs von der durchschnittlichen Filmdichte (also eine Abweichung von der "Norm") kompensieren zu können. Da hierzu der Film "mit den Augen des Fotopapiers" gesehen werden muss, handelt es sich um ein papierbezogenes Filmmodell.

Sind beide Modelle, nämlich das Papiermodell und das papierbezogene Filmmodell, hinreichen gut bekannt bzw. optimiert, so ist das Kopiergerät eingetestet. Es ist nun in der Regel möglich vorauszusagen, welche Änderung des Kopierlichts in der jeweiligen Farbe Blau, Grün oder Rot erforderlich ist, um eine bestimmte Änderung der Papierdichte in den Farben Gelb, Magenta und Cyan zu erreichen. Somit lassen sich bei einem eingetesteten Kopiergerät unter Verwendung der ermittelten Daten für das jeweilige Bildfeld die für die Aufbelichtung erforderlichen Kopierlichtmengen bestimmen. Basierend auf diesen Kopierlichtmengen werden entsprechende Steuersignale für in der Kopierstation des Kopiergeräts vorgesehene Farbverschlüsse ermittelt, welche nach Massgabe der Steuersignale beim Aufkopieren des Negativbildfelds auf das Fotopapier in den Kopierstrahlengang eingebracht werden. Ist das Aufkopieren des Negativbildfelds auf das Fotopapier beendet, werden die auf diese Weise erstellten Kopien in einer Entwicklungsstation, die nicht notwendigerweise integrierter Bestandteil des Kopiergeräts sein muss, es aber sein kann, entwickelt.

Obwohl solche Belichtungssteuerungsverfahren sehr leistungsfähig und in der Praxis erprobt sind, kommt es öfters vor, dass die in einem ersten Durchgang erstellten Kopien den sehr hohen Anforderungen des Kunden an die Bildqualität nicht genügen. Deshalb werden die in einem Erstdurchgang erstellten Papierbilder üblicherweise inspiziert und für die als nicht befriedigend eingestuften Papierbilder vom Bedienungspersonal Korrekturwerte bestimmt. Anschliessend werden die den nicht befriedigenden Kopien entsprechenden Kopiervorlagen in einem Zweitdurchgang erneut kopiert, wobei die bestimmten Korrekturwerte bei diesem Zweitdurchgang berücksichtigt werden. In der Regel gibt das Bedienungspersonal diese Korrekturwerte manuell, beispielsweise über eine Tastatur in die Rechen- und Steuereinheit des Kopiergerätes ein.

Für den Zweitdurchgang sind mehrere prinzipiell unterschiedliche Verfahren bzw. Vorgehensweisen bekannt. Ein häufig eingesetztes Verfahren besteht darin, für den Zweitdurchgang zur Erstellung der korrigierten Kopien dasselbe Kopiergerät zu verwenden wie für den Erstdurchgang. Hierbei sind grundsätzlich zwei Varianten zu unterscheiden.

Bei der ersten Variante wird das gesamte auf einer Rolle befindliche zusammengespleisste Filmband nach dem Erstdurchgang ausgangsseitig des Kopiergerätes wieder auf eine Rolle gewickelt, also auf ein Schneiden des Filmbandes nach dem Erstdurchgang verzichtet. Diese Rolle wird dann eingangsseitig des Kopiergerätes angedockt und das gesamte Filmband nochmals durch das Kopiergerät laufen gelassen. Beim Zweitdurchgang werden jedoch nur diejenigen Bildfelder auf das Fotopapier aufbelichtet, welche im Erstdurchgang zu nicht befriedigenden Kopien geführt haben, die übrigen Bildfelder durchlaufen das Kopiergerät, ohne dass eine erneute Aufbelichtung erfolgt.

Bei der zweiten Variante wird das Filmband nach dem Erstdurchgang in kurze Streifen - üblicherweise à vier Bildfelder - geschnitten, diejenigen Streifen, die Bildfelder enthalten, welche im Erstdurchgang zu nicht befriedigenden Kopien geführt haben, werden ausgesondert, neu zusammengespleisst und beispielsweise auf einer Rolle gesammelt. Diese Rolle wird dann eingangsseitig des Kopiergerätes angedockt und der Zweitdurchgang durchgeführt.

Bei beiden Varianten werden im Zweitdurchgang die Bildfelder, welche im Erstdurchgang zu nicht befriedigenden Kopien geführt haben, in der Messstation des Kopiergerätes erneut ausgemessen und analysiert, wobei bei der anschliessenden Bestimmung der Kopierlichtmengen die vom Bedienungspersonal nach dem Erstdurchgang bestimmten Korrekturwerte berücksichtigt werden. Hierbei ergibt sich aber das Problem, dass die im Zweitdurchgang bestimmten bildfeldspezifischen Daten (ohne Berücksichtigung der Korrekturwerte) von denen für das gleiche Bildfeld im Erstdurchgang bestimmten Daten abweichen können. Dafür gibt es mehrere Ursachen. Beispielsweise können die Bildvorlagen im Zweitdurchgang in der Messstation bezüglich ihrer Position leicht gegenüber dem Erstdurchgang verschoben sein, so dass die Abtastbereiche der Bildvorlage im Zweitdurchgang nicht vollkommen identisch mit denen des Erstdurchgangs sind, sondern leicht verschoben. Dadurch ist es möglich, dass die im Zweitdurchgang bestimmten Belichtungswerte auch ohne Berücksichtigung der Korrekturwerte, sondern nur aufgrund der leicht verschobenen Abtastbereiche, von den im Erstdurchgang bestimmten abweichen. Eine andere Ursache ergibt sich z. B. insbesondere bei der vorne erwähnten zweiten Variante, bei der die kurzen Negativstreifen nach dem Erstdurchgang neu zusammengespleisst werden. Es ist ein bekanntes Verfahren, dass vor dem Aufbelichten eines Bildfeldes zunächst eine grössere Anzahl von Bildfeldern, beispielsweise alle zu einem Negativfilm gehörenden, in der Messstation abgetastet werden und filmspezifische Daten, die sich aus der Abtastung mehrerer Bildfelder ergeben, zur Belichtungsberechnung herangezogen werden. Sind nun im Zweitdurchgang die einzelnen kurzen z.B. jeweils vier Bildfelder enthaltenden Negativstreifen, die im allgemeinen nur einen Bruchteil des ursprünglichen Negativfilms umfassen, zusammengespleisst, so kann auch dies dazu führen, dass im Zweitdurchgang selbst ohne Berücksichtigung der Korrekturwerte Kopierlichtmengen bestimmt werden, die von denen des Erstdurchgangs abweichen.

Da somit die im Erst- und im Zweitdurchgang für ein individuelles Bildfeld bestimmten Kopierlichtmengen bereits ohne Berücksichtigung der Korrekturwerte voneinander abweichen können, kommt es vor, dass die Berücksichtigung der Korrekturwerte im Zweitdurchgang nicht zu der gewünschten Verbesserung in der Bildqualität bei der im Zweitdurchgang erstellten Kopie führen, so dass unter Umständen ein weiterer Kopiervorgang vonnöten ist. Dieser Zustand ist unter dem Aspekt eines wirtschaftlichen und effizienten Betriebes des Kopiergerätes sehr unbefriedigend.

Zur Lösung dieses Problems wurde vorgeschlagen, dass man die im Erstdurchgang bestimmten Belichtungswerte abspeichert und sie beim Zweitdurchgang wiederum verwendet. Folglich werden die bildfeldspezifischen Daten im Zweitdurchgang nicht vollkommen neu bestimmt, sondern es werden die Belichtungswerte des Erstdurchgangs zusammen mit den bestimmten Korrekturwerten benutzt, um die Kopierlichtmengen für den Zweitdurchgang zu bestimmen. Aber auch dieses Verfahren hat diverse Nachteile. Insbesondere erlaubt es keine optimale Ausnutzung der Kapazität des Kopiergerätes. Moderne Hochleistungsprinter, wie sie heute in Grosslabors eingesetzt werden, sind technisch sehr aufwendige, extrem leistungsfähige Maschinen, in denen qualitativ hochwertige Komponenten eingesetzt werden. Es versteht sich, dass solche Maschinen relativ kostspielig sind und es deshalb erstrebenswert ist, ihre Fähigkeiten und Kapazitäten möglichst optimal zu nutzen, um einen wirtschaftlichen und effizienten Betrieb zu gewährleisten. Führt man jedoch auch den Zweitdurchgang auf einem solchen Hochleistungsprinter aus, so wird dieser nicht optimal genutzt, weil einerseits im Zweitdurchgang in der Regel nicht jedes Bildfeld aufbelichtet wird, sondern nur diejenigen die im Erstdurchgang zu nicht befriedigenden Kopien geführt haben. Andererseits bleibt bei Verwendung der Belichtungswerte des Erstdurchgangs für den Zweitdurchgang die Messstation, die qualitativ sehr hochwertig ausgelegt ist, praktisch ungenutzt. Zudem muss für den Fall, dass die kurzen Negativstreifen nach dem Erstdurchgang neu zusammengespleisst werden, eine grosse Anzahl solcher kurzer Negativstreifen mit im Erstdurchgang nicht befriedigend aufbelichteten Bildfeldern gesammelt werden, um eine Rolle zu erhalten, die genügend gross ist, damit sich ihre Verarbeitung mittels des Hochleistungsprinters im Zweitdurchgang überhaupt rentiert. Die durch das Sammeln bedingte Wartezeit kann aber zu Verzögerungen und zur Verlängerung der Gesamtbearbeitungszeit eines Kundenauftrags führen, was dem Kundenwunsch entgegensteht.

Dies sind unter anderem die Gründe, warum man heutzutage in vielen Grosslabors dazu übergegangen ist, nur den Erstdurchgang auf einem Hochleistungsprinter durchzuführen und die nötigen Korrekturen mit einem anderen Kopiergerät. Der Zweit- und gegebenenfalls jeder weitere Kopierdurchgang werden normalerweise mit einem weniger leistungsfähigen und auf geringere Durchsatzraten ausgelegten Kopiergerät, beispielsweise einem Minilab, durchgeführt. Aber auch dieses Verfahren ist noch deutlich verbesserungsfähig, weil z. B. die Erstdurchgangsdaten - falls sie überhaupt verfügbar bzw. auf das zweite Kopiergerät transferierbar sind - nur von sehr begrenztem Nutzen für den Zweitdurchgang sind, denn gleiche Belichtungswerte, z. B. Belichtungszeiten, führen normalerweise nicht zu gleichen Kopien auf dem Hochleistungsprinter einerseits und dem zweiten Kopiergerät andererseits. Ein Grund dafür ist z. B., dass die beiden Kopiergeräte unterschiedliche Belichtungssysteme, beispielsweise unterschiedliche Kopierlichtquellen und/oder unterschiedliche Farbverschlüsse, besitzen. Somit müssen in der Regel die Bildfelder bzw. die Kopiervorlagen in dem zweiten Kopiergerät zur Bestimmung der Kopierlichtmengen neu abgetastet werden, was die bereits vorne beschriebenen Nachteile mit sich bringt. Würde man beispielsweise mit denselben Belichtungszeiten, wie sie im Erstdurchgang in dem ersten Gerät für die Erstellung der Erstkopien verwendet wurden, den Zweitdurchgang in dem zweiten Gerät durchführen, so würden in der Regel die Zweitkopien trotz gleicher Belichtungszeiten von den Erstkopien abweichen. Es ist klar, dass dadurch eine effiziente und gezielte Korrektur im Zweitdurchgang nur sehr schwierig durchführbar ist. Da die Erstdurchgangsdaten bei einem solchen Verfahren mithin kaum nutzbar sind, besteht auch bei diesen Verfahren mit zwei Kopiergeräten ein deutlicher Verbesserungsbedarf.

Es ist daher eine Aufgabe der Erfindung, ein Verfahren zum Erstellen von fotografischen Kopien von fotografischen Kopiervorlagen bereitzustellen, welches auch bei der Notwendigkeit eines Zweitdurchgangs zur Erstellung qualitativ hochwertiger Kopien eine optimale Nutzung der Kopiergeräte ermöglicht. Insbesondere soll es das Verfahren ermöglichen, dass vorlagenspezifische (bildfeldspezifische) Daten, welche in einem ersten Kopiergerät bestimmt werden, in möglichst effektiver und einfacher Weise auch in einem zweiten Kopiergerät zum Erstellen weiterer Kopien (Papierbilder) verwendbar sind.

Das diese Aufgaben lösende Verfahren zum Erstellen von fotografischen Kopien von fotografischen Kopiervorlagen ist durch die Merkale des unabhängigen Patentanspruchs gekennzeichnet. Erfindungsgemäss werden also in einem Erstdurchgang, der in einem ersten Kopiergerät durchgeführt wird, zunächst Erstkopien erstellt, und die erforderlichen Zweitkopien werden in einem Zweitdurchgang mittels eines zweiten Kopiergeräts erstellt, welches mittels eines Eintestverfahrens auf das erste Kopiergerät kalibriert wird. Bei diesem Eintestverfahren werden die im Erstdurchgang mittels des ersten fotografischen Kopiergeräts ermittelten vorlagenspezifischen (bildfeldspezifischen) Daten einer Rechenund Steuereinheit des zweiten Kopiergeräts zugeführt. Mit Hilfe dieser vorlagenspezifischen Daten und mit Hilfe eines dem Kopiermaterial (Fotopapier) angepassten Vorlagenmodells (papierbezogenes Filmmodell), welches repräsentativ für das Verhalten des Kopiermaterials (Fotopapier) bei Änderungen der spektralen Zusammensetzung der Kopiervorlage (Bildfeld) ist, werden in der Rechen- und Steuereinheit des zweiten Kopiergeräts die für die Aufbelichtung des jeweiligen Bildfeldes in dem zweiten Kopiergerät erforderlichen Kopierlichtmengen ermittelt. Aus den ermittelten Kopierlichtmengen werden Steuersignale für in der Kopierstation des zweiten Kopiergeräts vorgesehenen Farbfilter und Verschlüsse ermittelt, welche nach Massgabe der Steuersignale beim Aufkopieren der Kopiervorlage (Bildfeld) auf das Kopiermaterial (Fotopapier) in den Kopierstrahlengang eingebracht werden. Die auf diese Weise erstellten Zweitkopien werden in einer Entwicklungsstation, z. B. einem Papierprozessor, entwickelt und anschliessend einer Analyse unterzogen. Basierend auf der Analyse wird das dem Kopiermaterial angepasste Vorlagenmodell (papierbezogenes Filmmodel) für das zweite Kopiergerät, z. B. in der Rechen- und Steuereinheit des zweiten Kopiergeräts, solange optimiert und jeweils wieder Zweitkopien erstellt, bis die Zweitkopien im wesentlichen gleich den Erstkopien sind. Ist dieser Zustand erreicht, so ist das zweite Kopiergerät auf das erste kalibriert. Somit ist das zweite Kopiergerät in der Lage, mit den vorlagenspezifischen (bildfeldspezifischen) Daten, die in dem ersten Kopiergerät ermittelt wurden, gleiche Kopien zu erzeugen wie das erste Kopiergerät.

Durch dieses Kalibrieren des zweiten auf das erste Kopiergerät ist es mithin möglich, die vorlagenspezifischen Daten des Erstdurchgangs effektiv und in einfacher Weise für den Zweitdurchgang und eventuell weitere Durchgänge zu nutzen. Ein erneutes Abtasten der Kopiervorlagen (Bildfelder) in dem zweiten Kopiergerät ist nicht mehr notwendig. Auf diese Weise werden eine optimale Nutzung der Kopiergeräte und eine effiziente Bearbeitung von Kundenaufträgen ermöglicht. Der Erstdurchgang kann auf einem auf hohe Durchsatzraten ausgelegten Hochleistungsprinter durchgeführt werden, der in lückenlosem Betrieb jeweils nur die Erstkopien erstellt und die vorlagenspezifischen Daten für eventuelle Zweitkopien einem zweiten Kopiergerät zur Verfügung stellt. Die Zweitkopien mit den erforderlichen Korrekturen werden auf einem zweiten, in der Regel weniger leistungsfähigen Kopiergerät erstellt, wobei die vorlagenspezifischen Daten, die das erste Kopiergerät ermittelt hat, optimale Verwendung finden. Dieses Verfahren hat im Vergleich zu der erneuten Abtastung der Kopiervorlage in dem zweiten Kopiergerät den zusätzlichen Vorteil, dass Korrekturmassnahmen in sehr viel höherem Masse zu der gewünschten Verbesserung in der Bildqualität der Zweitkopie führen.

In einer bevorzugten Verfahrensführung werden bei dem Eintestverfahren zur Kalibrierung des zweiten Kopiergerätes auf das erste Kopiergerät die entwickelten Zweitkopien, falls sie den Erstkopien noch nicht genügend gut entsprechen, bereichsweise, vorzugsweise punktweise, abgetastet und das von jedem Abtastbereich der Zweitkopien transmittierte oder remittierte Messlicht einer Detektoranordnung zugeführt. Hier wird das Messlicht spektral zerlegt und in wellenlängen- und intensitätsabhängige elektrische Messsignale umgesetzt. Letztere werden digitalisiert und zur Ermittlung kopiespezifischer Daten ausgewertet. Mit Hilfe der kopiespezifischen Daten wird das dem Kopiermaterial angepasste Vorlagenmodell (papierbezogenes Filmmodell) für das zweite Kopiergerät optimiert, wobei die in dem Erstdurchgang bestimmten vorlagenspezifischen Daten unverändert bleiben. Dieser Vorgang des Erstellens von Zweitkopien, ihrer Analyse und des Modifizierens des Vorlagenmodells wird solange wiederholt, bis das Vorlagenmodell optimal ist, d. h. bis sich mit dem zweiten Kopiergerät unter Verwendung der im Erstdurchgang bestimmten vorlagenspezifischen Daten Zweitkopien erstellen lassen, die im wesentlichen gleich den Erstkopien sind.

Das erfindungsgemässe Verfahren zum Erstellen von fotografischen Kopien wird bevorzugt so durchgeführt, dass die entwickelten Erstkopien jeweils einer Inspektion unterzogen werden, bei der entschieden wird, ob von der jeweils zugehörigen Kopiervorlage eine Zweitkopie erstellt wird und bei der gegebenenfalls Korrekturwerte für die Erstellung der Zweitkopie bestimmt werden. Dann werden die Kopiervorlagen, von denen die Zweitkopien erstellt werden sollen, sowie die jeweils zugehörigen Korrekturwerte dem zweiten Kopiergerät zugeführt und die Korrekturwerte in der Rechen- und Steuereinheit des zweiten Kopiergerätes in Belichtungskorrekturwerte transformiert, die zusammen mit den vorlagenspezifischen Daten aus dem Erstdurchgang zur Bestimmung der Kopierlichtmengen für die Erstellung der jeweiligen Zweitkopie herangezogen werden.

Eine spezielle Ausführungsvariante bzw. eine Weiterbildung zeichnet sich dadurch aus, dass die aus der spektralen Messung der Kopiervorlage im Erstdurchgang resultierenden und anschliessend digitalisierten Messsignale einer vorzugsweise orthogonalen Transformation bzw. Datenkompression, vorzugsweise der Karhunen-Loève-Transformation (siehe die bereits ziterte EP-A-0,475,897) unterzogen werden, und dass aus dieser Transformation hervorgehende Transformationskoeffizienten die vorlagenspezifischen (bildfeldspezifischen) Daten bilden, welche sowohl als Eingangsgrössen für das Vorlagenmodell (papierbezogenes Filmmodell) beim Erstdurchgang in dem ersten Kopiergerät als auch als Eingangsgrössen für das Vorlagenmodell (papierbezogenes Filmmodell) beim Zweitdurchgang in dem zweiten Kopiergerät verwendet werden. Vom Prinzip her eigen sich als Eingangsgrössen für das Vorlagenmodell (papierbezogenes Filmmodell) in dem ersten bzw. dem zweiten Kopiergerät aber auch die Dichten in den Grundfarben Blau, Grün und Rot, wie sie z. B. mit Hilfe von konventionellen Scannern bestimmbar sind.

Weiterhin ist es möglich, für das Eintestverfahren zur Kalibrierung des zweiten Kopiergerätes auf das erste Kopiergerät Produktionsnegative zu verwenden.

Im folgenden wird die Erfindung anhand der Zeichnung näher erläutert. In der schematischen, nicht massstäblichen Zeichnung zeigen:

Fig. 1:     eine Darstellung einer Anordnung der wesentlichen Teile eines fotografischen Kopiergeräts mit einer nachgeschalteten Entwicklungsstation zum Entwickeln des belichteten Kopiermaterials,

Fig. 2:     einen Gesamtüberblick zur Veranschaulichung des Zusammenwirkens von papierbezogenem Filmmodell und Papiermodell,

Fig. 3:     eine Blockdarstellung der wesentlichen Teile einer Verarbeitungsanlage zur Durchführung eines Ausführungsbeispiels des erfindungsgemässen Verfahrens,

Fig. 4:     wie Fig. 3, jedoch für eine Variante des Ausführungsbeispiels,

Fig. 5:     ein Ablaufschema zur Darstellung einer Vorgehensweise bei der Optimierung des Papiermodells und des papierbezogenen Filmmodells,

Fig. 6:     eine Darstellung eines Papiermodells,

Fig. 7:     eine Darstellung eines inversen Papiermodells, und

Fig. 8     eine Darstellung einer Kopiervorlage und einer davon erstellten Kopie zur Erläuterung einer Vorgehensweise bei der Optimierung der Modelle unter Verwendung von Produktionsnegativen.

Zur Durchführung des erfindungsgemässen Verfahrens werden typischerweise zwei fotografische Kopiergeräte (Printer) verwendet, nämlich ein erstes fotografisches Kopiergerät, in welchem in einem Erstdurchgang fotografische Erstkopien von den fotografischen Kopiervorlagen erstellt werden, und ein zweites fotografisches Kopiergerät, in welchem in einem Zweitdurchgang erforderliche fotografische Zweitkopien von den fotografischen Kopiervorlagen erstellt werden. Beispielsweise kann das erste Kopiergerät ein Hochleistungsprinter sein, wie er von der Anmelderin vertrieben wird, und das zweite Kopiergerät ein sogenanntes Minilab, wie es ebenfalls von der Anmelderin vertrieben wird. Das erfindungsgemässe Verfahren ist insbesondere dadurch gekennzeichnet, dass das zweite Kopiergerät mittels eines Eintestverfahrens, welches weiter hinten erläutert wird, auf das erste Kopiergerät kalibriert wird. Hierdurch wird es ermöglicht, dass die im Erstdurchgang in dem ersten Kopiergerät bestimmten vorlagenspezifischen Daten in effizienter Weise auch von dem zweiten Kopiergerät zur Erstellung von Zweikopien verwendet werden können, und zwar insbesondere auch in solchen Fällen, in denen das zweite Kopiergerät ein von dem ersten Gerät unterschiedliches Belichtungssystem aufweist. Dies hat weiter den Vorteil, dass erforderliche Korrekturen bei der Erstellung der Zweitkopien deutlich gezielter und wirkungsvoller durchführbar sind.

In der folgenden Beschreibung wird der Einfachheit halber und mit beispielhaftem Charakter auf den in der Praxis häufig auftretenden Fall Bezug genommen, dass belichtete Negativfilmstreifen, auf denen sich Bildfelder als Kopiervorlagen befinden, als Kopiervorlagenmaterial dienen und Fotopapier als Kopiermaterial, auf dem die fotografischen Kopien in Form von Papierbildern erstellt werden. Die Negativfilme bzw. die auf ihnen befindlichen Bildfelder stehen somit als repräsentatives Beispiel für Kopiervorlagenmaterial bzw. Kopiervorlagen und das Fotopapier bzw. die Papierbilder stehen als repräsentatives Beispiel für fotografisches Kopiermaterial bzw. fotografische Kopien. Es versteht sich, dass das erfindungsgemässe Verfahren nicht auf dieses Beispiel beschränkt ist. So können insbesondere z.B. auch Diapositive als Kopiervorlagen dienen und Folien als fotografische Kopien.

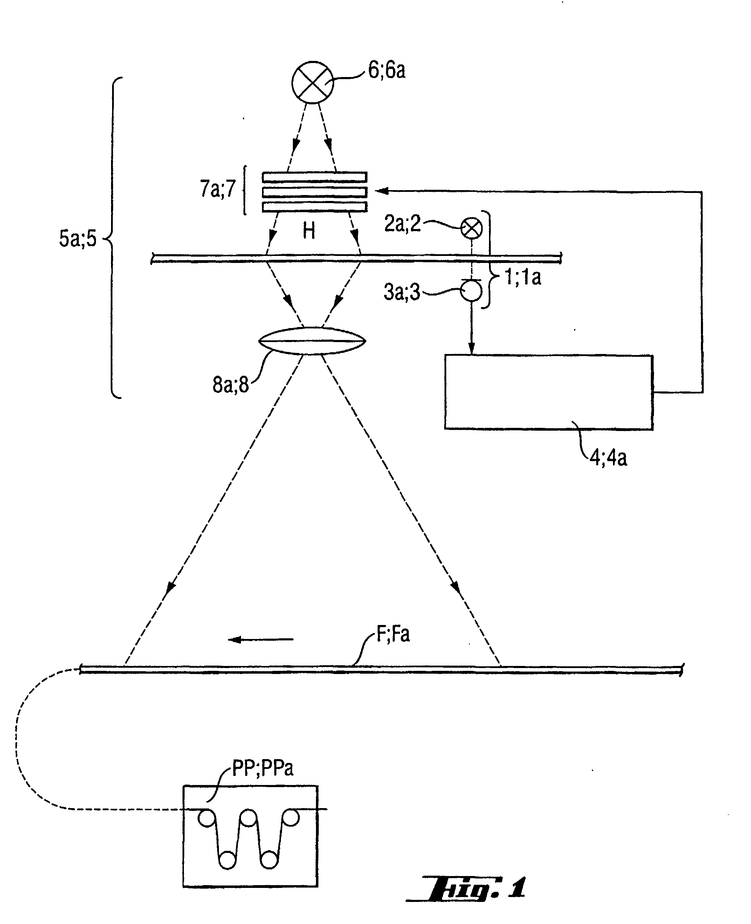

Im folgenden wird nun zunächst anhand des Erstdurchgangs zur Erstellung der Erstkopien in dem ersten Kopiergerät die allgemeine Funktionsweise eines typischen, an sich bekannten fotografischen Kopiergeräts erläutert. In Fig. 1 ist eine Anordnung der wesentlichen Teile eines fotografischen Kopiergeräts mit einem nachgeschalteten Papierprozessor PP; PPa als Entwicklungsstation schematisch dargestellt. Da die beiden für das erfindungsgemässe Verfahren verwendeten Kopiergeräte von ihrer prinzipiellen Funktionsweise im wesentlichen gleich sein können, gelten die folgenden Erläuterungen der allgemeinen Funktionsweise eines Kopiergeräts in sinngemäss gleicher Weise auch für das zweite Kopiergerät. Zur Verdeutlichung, dass die einzelnen sich entsprechenden Teile der beiden Kopiergeräte durchaus unterschiedlich ausgestaltet sein können (z. B. unterschiedliche Belichtungssysteme), sind jedoch die in Fig. 1 dargestellten Bauteile mit zwei Bezugszeichen versehen. Für das folgende sei vereinbart, dass sich die mit dem Buchstaben "a" ergänzten Bezugszeichen auf das zweite Kopiergerät beziehen und diejenigen ohne den Buchstaben "a" auf das erste Kopiergerät.

Die in Fig. 1 gezeigte Anordnung der wesentlichen Teile eines fotografischen Kopiergeräts mit nachgeschaltetem Papierprozessor PP; PPa umfasst im wesentlichen eine Messstation 1;1a, in welcher mittels einer Messlichtquelle 2;2a und einer Detektoranordnung 3;3a ein die Bildfelder enthaltender Negativfilm N, bereichsweise, bevorzugt punktweise, abgetastet wird. Vom Prinzip des erfindungsgemässen Verfahrens her muss das zweite Kopiergerät nicht notwendigerweise eine solche Messstation 1a aufweisen. Da jedoch heute handelsübliche Kopiergeräte, die für das erfindungsgemässe Verfahren geeignet sind, in der Regel eine Messstation zum Abtasten des Negativfilms N enthalten, sei für das folgende beispielhaft angenommen, dass auch in dem zweiten Kopiergerät die Messstation 1a vorgesehen ist. Beim Erstdurchgang wird der Negativfilm N in der Messstation 1 bereichsweise, bevorzugt punktweise, abgetastet. Das von jedem Abtastbereich des Negativfilms N transmittierte Licht wird von der Detektoranordnung 3 spektral zerlegt und in wellenlängen- und intensitätsabhängige elektrische Messsignale umgesetzt. Anschliessend werden diese elektrischen Messsignale digitalisiert und zur Ermittlung vorlagenspezifischer Daten ausgewertet, die für das jeweilige Bildfeld spezifisch sind. Diese Digitalisierung und Auswertung kann sowohl in der Detektoranordnung 3 als auch in einer nachgeschalteten Rechen- und Steuereinheit 4;4a erfolgen. Mit Hilfe dieser vorlagenspezifischen Daten werden von der Rechen- und Steuereinheit 4;4a die zum Aufbelichten dieses Bildfelds auf Kopiermaterial erforderlichen Kopierlichtmengen ermittelt. Sind die erforderlichen Kopierlichtmengen bestimmt, werden von der Rechen- und Steuereinheit 4;4a entsprechende Steuersignale erzeugt, die zur Steuerung von in der nachfolgenden Kopierstation 5;5a vorgesehenen Farbverschlüssen 7;7a dienen (selbstverständlich kommen auch andere bekannte Verfahren zur Steuerung der Belichtung in den drei Farben in Frage, z. B. solche die Farbfilter und Verschlüsse verwenden). In dieser Kopierstation 5;5a erfolgt das eigentliche Aufbelichten des jeweiligen Bildfeldes auf das Fotopapier F;Fa. Das Aufbelichten der Bildfelder auf Fotopapier erfolgt derart, dass die Farbverschlüsse 7;7a entsprechend den in der Rechen- und Steuereinheit 4;4a erzeugten Steuersignalen in den Strahlengang einer Kopierlichtquelle 6;6a eingebracht werden. Mittels einer Abbildungsoptik 8;8a wird dann das entsprechende Bildfeld auf das Fotopapier F abgebildet. Das belichtete Fotopapier muss nun noch entwickelt werden, was in dem Papierprozessor PP; PPa erfolgt. Dieser Papierprozessor PP; PPa kann Bestandteil einer kompletten fotografischen Verarbeitungsstrecke sein, kann aber auch ein selbständiges Gerät sein. Soweit entspricht die in Fig. 1 dargestellte Anordnung dem Stand der Technik, wie er in zahlreichen Druckschriften beschrieben ist.

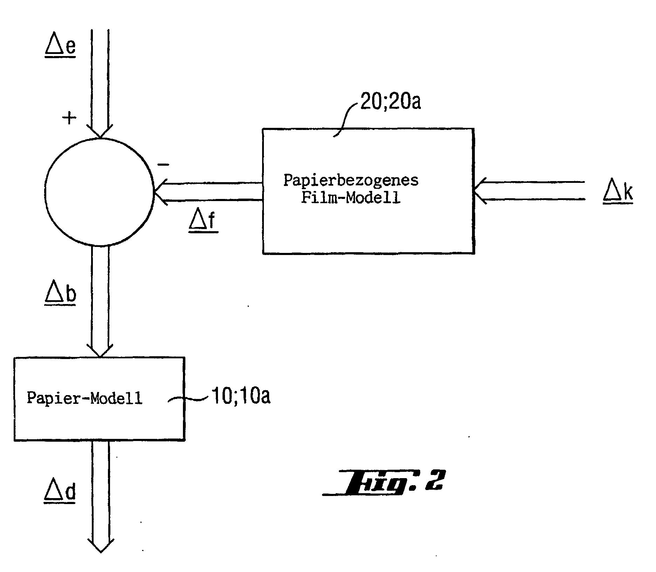

Bevor nun das Eintestverfahren zur Kalibrierung des zweiten auf das erste Kopiergerät erläutert wird, sind einige Vorbemerkungen bezüglich der Bestimmung der Kopierlichtmengen bzw. der Belichtungszeiten in fotografischen Kopiergeräten vonnöten, die an sich ebenfalls Stand der Technik sind. Damit die in den jeweiligen Farben Blau, Grün, Rot erforderlichen Kopierlichtmengen richtig ermittelt werden können, bedient man sich mit Vorteil - wie bereits weiter vorne erwähnt - zweier Modelle, welche repräsentativ für das Fotopapier bzw. für den Negativfilm sind, nämlich eines Papiermodells und eines papierbezogenen Filmmodells. Diese Modellierung ist in Fig. 2 symbolisch veranschaulicht. Das Papiermodell 10;10a gibt im wesentlichen wieder, wie sich die Papierdichte, also die Farbdichte des Fotopapiers, welche im wesentlichen durch die Konzentration der Farbstoffe Gelb, Magenta, Cyan bestimmt ist, für ein bestimmtes Fotopapier ändert in Abhängigkeit von Änderungen des Kopierlichts in den drei Grundfarben Blau, Grün und Rot. Das Papiermodell 10;10a ist also repräsentativ für die Absorptionseigenschaften des Fotopapiers bei Änderungen der Belichtung. Insbesondere berücksichtigt das Papiermodell 10;10a auch Überlappungen der spektralen Papierempfindlichkeiten und Nebenabsorptionen, worunter der Effekt verstanden wird, dass eine Beaufschlagung des Fotopapiers mit Licht einer der Grundfarben Änderungen der optischen Dichte des Fotopapiers in allen drei Farben zur Folge hat. Das papierbezogenen Filmmodell 20;20a gibt hingegen wieder, wie das Fotopapier auf Änderungen der Negativfilmdichte bei konstant gehaltenem Kopierlicht reagiert. Dieses Modell gibt somit auch an, wie das Kopierlicht geändert werden muss, um Abweichungen der tatsächlich gemessenen Dichte eines Negativs von der durchschnittlichen Filmdichte kompensieren zu können. Hierzu muss der Film aber "mit den Augen des Fotopapiers"gesehen werden, die im allgemeinen von den "Augen der Detektoranordnung 3" verschieden sind. Aus diesem Grunde spricht man von einem papierbezogenen Filmmodell.

Die "durchschnittliche Filmdichte" ist als ein Referenzwert bzw. als eine Norm für die Filmdichte zu verstehen. Sie kann beispielsweise durch eine neutral graue Norm-Kopiervorlage festgelegt werden, oder indem über die gemessenen spektralen Dichten einer Vielzahl von Kopiervorlagen gemittelt wird.

Es versteht sich, dass die beiden Modelle 10;10a,20;20a für die beiden Kopiergeräte nicht gleich sein müssen, deshalb sind in Fig. 2 für die beiden Modelle jeweils zwei Bezugzeichen eingetragen, wobei der Buchstabe "a" wiederum andeutet, das das zeite Kopiergerät gemeint ist.

Die in Fig. 2 eingetragenen Ein- beziehungsweise Ausgangsgrössen der beiden Modelle 10;10a,20;20a sowie der Vektor $\underline{\Delta e}$ haben die folgenden Bedeutungen: Das Kopierlicht kann generell durch seine Blau-, Grün- und Rotanteile charakterisiert werden, welche in einem Vektor

$$\underline{e} = \underline{e}_0 + \underline{\Delta e} = (e_B, e_G, e_R)$$

zusammengefasst werden; wobei die Indices B,G,R für Blau, Grün, Rot stehen. Der Vektor $\underline{e}$ bezeichnet den jeweiligen Kopierlichtvektor, der sich aus den beiden Vektoren $\underline{e}_0$ und $\underline{\Delta e}$ zusammensetzt. Dabei bezeichnet $\underline{e}_0$ einen Kopierlichtvektor, mit dem ein Negativ, das die durchschnittliche Filmdichte aufweist, korrekt auf das Fotopapier aufbelichtet wird und $\underline{\Delta e}$ die Abweichung von dem durchschnittlichen Kopierlichtvektor $\underline{e}_0$.

Der Vektor $\underline{\Delta k}$ ist eine weiter hinten genauer erklärte Grösse, welche mit hoher Genauigkeit repräsentativ für die spektrale Dichteverteilung der Kopiervorlage ist. Der Vektor $\underline{\Delta k}$ dient als Eingangsgrösse für das papierbezogenen Filmmodell 20;20a. Die Dichte der Kopiervorlage bzw. des Negativs wird durch den Filmdichtevektor $\underline{f}$ beschrieben, der wie folgt definiert ist:

$$\underline{f} = \underline{f}_0 + \underline{\Delta f} = (f_B, f_G, f_R);$$

Wobei die Indices B,G,R für Blau, Rot, Grün stehen; der Vektor $\underline{f}_0$ bezeichnet die durchschnittliche Filmdichte; der Vektor $\underline{\Delta f}$ die Abweichung von dieser durchschnittlichen Filmdichte und die Komponenten $f_B, f_G, f_R$ die Komponenten des Vektors $\underline{f}$ in den Farben Blau, Grün, Rot.

Die Papierdichtewerte werden ebenfalls durch einen entsprechenden Papierdichtevektor

$$\underline{d} = \underline{d}_0 + \underline{\Delta d} = (d_Y, d_M, d_C)$$

charakterisiert; wobei die Indices Y,M,C für Yellow, Magenta, Cyan stehen; der Vektor $\underline{d}_0$ bezeichnet die angestrebte Papierdichte; der Vektor $\underline{\Delta d}$ die Abweichung von dieser angestrebten Papierdichte und die Komponenten $d_Y, d_M, d_C$ die Komponenten des Vektors $\underline{d}$ in den Farben Yellow, Magenta, Cyan.

Wird ein Negativfilm in den Belichtungsstrahlengang (Kopierlicht) eingebracht, so reduziert sich die effektive Belichtung für die drei Farbschichten des Fotopapiers. Diese Belichtungsreduktion wird vektoriell beschrieben durch den Vektor

$$\underline{b} = \underline{e} - \underline{f}.$$

Gemäss der Darstellung in Fig. 2 dient folglich das papierbezogenen Filmmodell 20;20a dazu, aus dem Vektor $\underline{\Delta k}$, welcher repräsentativ für die Dichteverteilung der jeweiligen Kopiervorlage ist, den Vektor $\underline{\Delta f}$ zu bestimmen, der die Abweichung der Dichte der jeweiligen Kopiervorlage von der durchschnittlichen Filmdichte beschreibt. Mit dem Papiermodell 10;10a lässt sich berechnen, welche Änderung in der Dichte $\underline{\Delta d}$ der Kopie resultiert, wenn die effektive Belichtung um einen Vektor $\underline{\Delta b}$ geändert wird. Umgekehrt lässt sich mit einem zum Papiermodell 10;10a inversen Modell - dem inversen Papiermodell - berechnen, welche Änderung $\underline{\Delta b}$ in der effektiven Belichtung realisiert werden muss, um eine vorgegebene Änderung $\underline{\Delta d}$ in der Dichte der Kopie zu erzielen. Mit Hilfe des Papiermodells lässt sich also relativ genau voraussagen, welches die erforderliche Belichtungsänderung ist, um eine bestimmte Änderung der Papierdichte zu erreichen.

Wie bereits erwähnt, resultiert (bei kalibriertem Gerät) aus einer Beaufschlagung einer Kopiervorlage, welche die durchschnittliche Filmdichte ($\underline{f}_0$) aufweist, mit Kopierlicht, welches durch den Kopierlichtvektor $\underline{e}_0$ charakterisiert ist, eine Kopie, welche die angestrebte Papierdichte ($\underline{d}_0$) aufweist. Ausgehend von diesem Grundzustand, ist es folglich mit den in Fig. 2 dargestellten Modellen 10;10a, 20;20a möglich, den Einfluss von Änderungen des Kopierlichts (Vektor $\underline{\Delta e}$) und der Filmdichte (Vektor $\underline{\Delta f}$) auf die Papierdichte (Vektor $\underline{\Delta d}$) vorauszusagen. Diese Voraussage (und die Voraussage der gegebenenfalls erforderlichen Korrektur) wird natürlich umso besser, je besser die einzelnen Modelle (Papiermodell 10;10a, papierbezogenes Filmmodell 20;20a) die tatsächlichen Verhältnisse wiedergeben. Lässt man zunächst vom Benutzer vorgegebene Korrekturen ausser acht, so ist es im Produktionsbetrieb das Ziel der Belichtungsberechnung, zunächst für das jeweils zu kopierende Negativ mit Hilfe des papierbezogenen Filmmodells 20;20a die Abweichung der Filmdichte ($\underline{\Delta f}$) des jeweiligen Negativs von der durchschnittlichen Filmdichte ($\underline{f}_0$) zu ermitteln, und dann den Kopierlichtvektor $\underline{\Delta e}$ so zu bestimmen, dass die effektive Belichtung ($\underline{b}$) wieder dem Wert entspricht, der zu der angestrebten Papierdichte ($\underline{d}_0$) bei der Kopie führt.

Das papierbezogene Filmmodell kann beispielsweise eine Belichtungsmatrix sein, die den jeweiligen Eingangsvektor $\underline{\Delta k}$ in den Filmdichtvektor $\underline{\Delta f}$ transformiert. Eine solche Belichtungsmatrix ist bekanntermassen (z.B. aus EP-A-0,475,897) eine hinreichend genaue Realisierung des papierbezogenen Filmmodells 20;20a. Der Eingangsvektor $\underline{\Delta k}$, mit dem die Belichtungsmatrix verknüpft wird, lässt sich wie folgt bestimmen: Bei der punktweisen Abtastung des Negativs in der Messstation 1 (Fig. 1) werden zunächst von jedem Abtastbereich (Messpunkt) spektrale Transmissionen (oder bei Remissionsmessung spektrale Remissionen) bestimmt. Hierzu wird das von der Messlichtquelle 2 ausgesandte und durch den Abtastbereich (Messpunkt) des Negativs transmittierte Licht von dem jeweiligen Detektor der Detektoranordnung 3 in ein entsprechendes elektrisches Messignal umgesetzt, welches der Transmission des Negativs bei einer bestimmten Wellenlänge entspricht. Diese Transmissionswerte werden durch Logarithmieren zu spektralen Dichtewerten umgeformt und mit einer entsprechenden Referenzdichte z.B. einer neutral grauen Norm-Kopiervorlage verglichen. Die daraus resultierenden spektralen Dichtedifferenzen werden nun einer Transformation unterworfen, vorzugsweise der Karhunen-Loève-Transformation. Von den Transformationskoeffizienten - im folgenden mit "KLT-Koeffizienten" abgekürzt - werden nach bestimmten Kriterien (siehe z.B. EP-A-0,475,897) eine Anzahl Transformationskoeffizienten, vorzugsweise sieben Tranformationskoeffizienten, ausgewählt, die mit hoher Genauigkeit repräsentativ für die Dichteverteilung der Kopiervorlage sind. Diese sieben Transformationskoeffizienten werden in dem Vektor $\underline{\Delta k}$ dargestellt und bilden bei der Darstellung in Fig. 2 die Eingangsgrösse, die mit der Belichtungsmatrix nach der Gleichung

$$\underline{\Delta f} = E\, \underline{\Delta k}$$

(E = Belichtungsmatrix)

verknüpft wird, um den jeweiligen Filmdichtevektor $\underline{\Delta f}$ zu erhalten, der ein Mass für die Abweichung der Dichte des jeweiligen Negativs des Films von der durchschnittlichen Filmdichte $\underline{f}_0$ ist. Die Komponenten des Vektors $\underline{\Delta k}$ sind also

sieben KLT-Koeffizienten. Es ist klar, dass im Falle von sieben Transformationskoeffizienten des Vektors $\underline{\Delta k}$ die Matrix E eine 3x7-Matrix ist, wenn der Vektor $\underline{\Delta f}$ drei Komponenten - wie oben beschrieben - umfasst.

Vom Prinzip her können aber genauso die Dichten der Kopiervorlage in den drei Grundfarben Rot, Grün, Blau als Eingangsgrösse verwendet werden, die mit der Belichtungsmatrix E nach der obengenannten Gleichung verknüpft werden. Die Belichtungsmatrix E ist für diesen Fall eine 3x3-Matrix.

Somit lässt sich mit Hilfe des Vektors $\underline{\Delta k}$ und der Belichtungsmatrix E als papierbezogenem Filmmodel 20; 20a der Vektor $\underline{\Delta f}$ bestimmen und mit diesem die Kopierlichtmengen bzw. der Kopierlichtvektor $\underline{e}$.

Vor Beginn der Produktion in einem fotografischen Kopiergerät wird dieses zunächst kalibriert bzw. eingetestet. Hierunter versteht man im wesentlichen die Optimierung der beiden in Fig. 2 dargestellten Modelle 10;10a,20; 20a. Ist diese Kalibrierung erfolgt, so wird im Betrieb mit Hilfe der ermittelten Daten des jeweiligen Negativbildfeldes und mit Hilfe des papierbezogenen Filmmodells 20;20a die für die Aufbelichtung erforderliche Kopierlichtmenge ermittelt. Das Papiermodell 10;10a bzw. das inverse Papiermodell kommt zum einen im Falle eines Zweitdurchgangs zur Anwendung, wenn die vom Bedienungspersonal bestimmten Korrekturwerte in Belichtungskorrekturen umgesetzt werden müssen, und zum anderen wird es beim Kalibrieren zum Optimieren des papierbezogenen Filmmodells 20; 20a verwendet.

Kurz umrissen kann das Kalibrieren des ersten Kopiergerätes beispielsweise wie folgt durchgeführt werden: Zunächst wird das Papiermodell 10 bestimmt. Für viele Anwendungen genügt für das Papiermodell 10 ein linearer Ansatz. In solchen Fällen kann als Papiermodell 10 eine invertierbare Matrix, die Papiermatrix, verwendet werden. Diese Papiermatrix wird z. B. aufgrund einer Serie von mehreren Testbelichtungen, beispielsweise fünfzehn Testbelichtungen, bestimmt. Diese Testbelichtungen erfolgen durch ein Testfilter, also ohne Kopiervorlage, wobei die Farbdichten des Testfilters im wesentlichen denjenigen eines Negativs mit durchschnittlicher Filmdichte ($\underline{f_0}$) entsprechen. Die unterschiedlichen Testbelichtungen werden jeweils mit vorgegebenen Kopierlichtabweichungen, charakterisiert durch Kopierlichtvektoren $\underline{\Delta e_N}$, durchgeführt. Somit sind auch die Änderungen in der effektiven Belichtung, beschrieben durch die Vektoren $\underline{\Delta b_N}$, für die Testbelichtungen bekannt. Die aus diesen Änderungen resultierenden Änderungen in den Papierdichten $\underline{\Delta d_N}$ der erstellten Testkopien werden mittels eines Densitometers gemessen und sind dann auch bekannt. Gemäss der Darstellung für das Papiermodell in Fig. 2 gilt für die Papiermatrix die Beziehung:

$$\underline{\Delta d}_N = P\ \underline{\Delta b}_N$$

(P = Papiermatrix)

Mit den bekannten Werten von $\underline{\Delta b}_N$ und $\underline{\Delta d}_N$ ist somit die Papiermatrix P beispielsweise mittels eines Regressionsverfahrens (multilineare Regression) bestimmbar.

Als nächstes wird dann die Belichtungsmatrix E, die als papierbezogenes Filmmodell 20 dient, optimiert. Hierfür wird von einem ersten Näherungswert für die Belichtungsmatrix E ausgegangen, der entweder bekannt ist, oder wie weiter hinten erläutert ermittelbar ist. Für die Optimierung der Belichtungsmatrix E wird eine Serie von Testfilmen unterschiedlichen Fabrikats, beispielsweise zehn Testfime, verwendet. Jeder dieser Testfilme enthält mehrere, beispielsweise ungefähr zehn, Negativbildfelder, von denen zwar jedes für sich genommen homogen belichtet ist, aber jedes Negativbildfeld gegenüber den anderen eine unterschiedliche Filmdichte (unterschiedliche Färbung und/oder Belichtung) aufweist. Von den insgesamt n Negativbildfeldern auf den Testfilmen werden in dem Kopiergerät Testkopien erstellt. Dabei wird für jedes der Negativbildfelder ein Vektor $\underline{\Delta k}_n$ - wie vorne beschrieben - bestimmt, der mit Hilfe der jeweils aktuellen Belichtungsmatrix E dazu dient, die benötigten Kopierlichtmengen für das jeweilige Negativbildfeld zu bestimmen. Ist die Belichtungsmatrix noch nicht optimal, so resultieren mehr oder weniger unterschiedlich farbstichige Testkopien. Deren Papierdichte wird mittels eines Densitometers gemessen und daraus die Papierdichtevektoren $\underline{\Delta d}_n$ bestimmt. Mittels der bekannten inversen Papiermatrix $P^{-1}$ lassen sich daraus die Vektoren $\underline{\Delta b}_n{}^*$ bestimmen, welche die Belichtungsabweichungen beschreiben, die die Änderungen in der Papierdichte ($\underline{\Delta d}_n$) bewirkt haben. Andererseits können aus den bekannten Vektoren $\underline{\Delta k}_n$ für die Negativbildfelder und den ebenfalls bekannten Vektoren $\underline{\Delta e}_n$ für das jeweils verwendete Kopierlicht mit Hilfe der aktuellen Belichtungsmatrix E die Vektoren $\underline{\Delta b}_n$ gemäss der folgenden Beziehung berechnet werden:

$$\underline{\Delta b}_n = \underline{\Delta e}_n - E\ \underline{\Delta k}_n$$

Nun wird mittels eines mathematischen Optimierungsverfahrens ein besserer Wert für die Belichtungsmatrix E berechnet, beispielsweise indem der Fehler

$$E_F = \frac{1}{n} \sum_{n} |\underline{\Delta b_n}^* - \underline{\Delta b_n}|^2$$

minimiert wird. Als Optimierungsverfahren eignet sich dabei z. B. die multilineare Regression.

Auf diese Weise kann die Belichtungsmatrix iterativ optimiert werden. Ist das Kopiergerät kalibriert, also die Belichtungmatrix E optimal, so ist es mit Hilfe dieser optimalen Belichtungsmatrix E möglich, sämtliche Negativbildfelder der unterschiedlichen Testfilme unabhängig von deren Belichtung, Färbung oder des Filmfabrikats mit grosser Genauigkeit auf ein einheitliches Grau zu kopieren. Dies dient auch gleichzeitig als Kriterium für die Beendigung der Optimierung der Belichtungsmatrix E. Ergibt die Aufbelichtung der verschiedenen Negativbildfelder der unterschiedlichen Testfilme Testkopien, die unabhängig von dem jeweiligen Negativbildfeld alle das gleiche einheitliche Grau aufweisen, also im wesentlichen identisch sind, so ist die Belichtungsmatrix E optimal und das Kopiergerät eingetestet.

Ist zu Beginn der Optimierung kein guter erster Näherungswert für die Belichtungsmatrix E bekannt, so kann dieser beispielsweise wie folgt gewonnen werden: Man geht davon aus, dass sich die spektralen Empfindlichkeiten des Fotopapiers auf drei diskrete Wellenlängen konzentrieren, nämlich beispielsweise $\lambda_B \approx 470$ nm, $\lambda_G \approx 550$ nm und $\lambda_R \approx 690$ nm. Die drei Komponenten des Filmdichtevektors $\underline{f}$ entsprechen mit dieser Annahme gerade den Werten der spektralen Filmdichte, die bei genau diesen Wellenlängen gemessen worden sind. Andererseits lassen sich die spektralen Filmdichten aus dem Karhunen-Loève-Transformationsvektor $\underline{\Delta k}$ (der nicht nur aus den spektralen Filmdichtewerten bei genau den genannten drei Wellenlängen bestimmt worden ist, sondern auch aus den spektralen Filmdichtewerten bei den anderen Wellenlängen) unter Anwendung der Inversen Karhunen-Loève-Transformation mit sehr guter Näherung direkt berechnen. Damit ist über die obengenannte Gleichung

$$\underline{\Delta f} = E \, \underline{\Delta k}$$

auch ein erster Näherungswert für die Belichtungsmatrix E bekannt.

Das erfindungsgemässe Verfahren ist insbesondere dadurch gekennzeichnet, dass das zweite Kopiergerät mittels eines Eintestverfahrens auf das erste Kopiergerät kalibriert wird. Es wird für das folgende davon ausgegangen, dass das erste Kopiergerät zur Erstellung der Erstkopien bereits - beispielsweise wie voranstehend beschrieben - kalibriert ist. D. h. von sämtlichen auf den Testfilmen befindlichen Negativbildfeldern werden mit dem ersten Kopiergerät unter Verwendung des für jedes Negativbildfeld individuell bestimmten $\underline{\Delta k_n}$-Vektors mit den sieben KLT-Koeffizienten und der optimalen Belichtungsmatrix E einheitlich graue, im wesentlichen identische Testkopien erstellt. Das Eintestverfahren zur Kalibrierung des zweiten auf das erste Kopiergerät wird dann beispielsweise wie folgt durchgeführt. Von denselben Testfilmen mit denselben Negativbildfeldern mit denen das erste Kopiergerät kalibriert wurde, werden nun mit dem zweiten Kopiergerät ebenfalls Testkopien erstellt. Dazu werden zunächst die im ersten Kopiergerät für jedes Negativbildfeld bestimmten Vektoren $\underline{\Delta k_n}$ als vorlagenspezifische Daten der Rechen- und Steuereinheit 4a (Fig. 1) des zweiten Kopiergerätes zugeführt. Es versteht sich natürlich, dass die im ersten Kopiergerät ermittelten Vektoren $\underline{\Delta k_n}$ gespeichert wurden. Mit Hilfe einer aktuellen Belichtungsmatrix für das zweite Kopiergerät und der Vektoren $\underline{\Delta k_n}$, die in dem ersten Kopiergerät bestimmt wurden, werden nun z. B. von der Rechen- und Steuereinheit 4a des zweiten Kopiergerätes die für die Aufbelichtung der auf den Testfilmen befindlichen Negativbildfelder erforderlichen Kopierlichtmengen individuell ermittelt. Aus diesen Kopierlichtmengen werden Steuersignale für die in der Kopierstation 5a des zweiten Kopiergerätes vorgesehenen Farbverschlüsse 7a ermittelt (natürlich kommen auch hier andere bekannte Verfahren zur Steuerung der Belichtung in den drei Farben in Frage), welche nach Massgabe der Steuersignale beim Aufkopieren des jeweiligen Negativbildfeldes auf das Fotopapier in den Kopierstrahlengang eingebracht werden. Die auf diese Weise in dem zweiten Kopiergerät erstellten Testkopien werden in dem Papierprozessor PPa entwickelt und anschliessend analysiert. Sind die in dem zweiten Kopiergerät erstellten Testkopien ebenfalls im wesentlichen identisch, weisen also alle, unabhängig von dem verwendeten Negativbildfeld auf den Testfilmen, die gleiche einheitlich graue "Farbe" auf, so ist das zweite Kopiergerät auf das erste Kopiergerät kalibriert und das Eintestverfahren beendet. Sind die auf dem zweiten Kopiergerät erstellten Testkopien nicht einheitlich grau, so werden die Testkopien densitometrisch ausgemessen, und mittels der gemessenen Papierdichten, z. B. in sinngemäss gleicher Weise, wie vorne beschrieben, ein besserer Näherungswert für die Belichtungsmatrix des zweiten Kopiergeräts bestimmt. Auf diese Weise wird die Belichtungsmatrix des zweiten Kopiergerätes iterativ optimiert, bis sich auch auf dem zweiten Kopiergerät unter Verwendung der im ersten Kopiergerät bestimmten Vektoren $\underline{\Delta k_n}$ einheitlich graue Testbilder, unabhängig von dem individuellen Negativbildfeld der Testfilme, ergeben. Ist dies erreicht, so ist das zweite Kopiergerät auf das erste kalibriert.

Bevorzugt werden bei der gegebenenfalls erforderlichen densitometrischen Ausmessung der Testkopien diese bereichsweise, vorzugsweise punktweise, abgetastet, das von jedem Abtastbereich der jeweiligen Testkopie transmittierte Messlicht einer Detektoranordnung zugeführt, spektral zerlegt und in wellenlängen- und intensitätsabhängige elektrische Messsignale umgesetzt. Die elektrischen Messsignale werden digitalisiert und zur Ermittlung kopiespezifischer Daten, welches bevorzugt die Papierdichtevektoren $\underline{\Delta d}_N$ sind, ausgewertet. Mit Hilfe der kopiespezifischen Daten (Papierdichtevektoren $\underline{\Delta d}_N$) wird dann, z. B. in analoger Weise wie vorne beschrieben, die Belichtungsmatrix des zweiten Kopiergerätes optimiert, wobei die in dem ersten Kopiergerät bestimmten vorlagenspezifischen Daten (Vektoren $\underline{\Delta k}_n$) unverändert bleiben.

Ist das zweite Kopiergerät optimal auf das erste kalibriert, so ist das zweite Kopiergerät im normalen Produktionsbetrieb in der Lage, mit Hilfe des im ersten Kopiergerät für eine bestimmte Kopiervorlage ermittelten Vektors $\underline{\Delta k}$ und mit Hilfe seiner eigenen Belichtungsmatrix von dieser Kopiervorlage eine Zweitkopie zu erstellen, die im wesentlichen identisch mit der im ersten Kopiergerät erstellten Erstkopie ist. Es ist nicht mehr notwendig, den Vektor $\underline{\Delta k}$ im zweiten Kopiergerät neu zu bestimmen. Dies ist insbesondere vorteilhaft bei Korrekturmassnahmen im Zweitdurchgang. Da nämlich im Zweitdurchgang ohne Korrekturmassnahmen Zweitkopien erstellt werden, die im wesentlichen identisch mit den Erstkopien sind, lassen sich Korrekturen wesentlich effizienter und mit deutlich höherem Erfolg hinsichtlich der gewünschten Verbesserung durchführen.

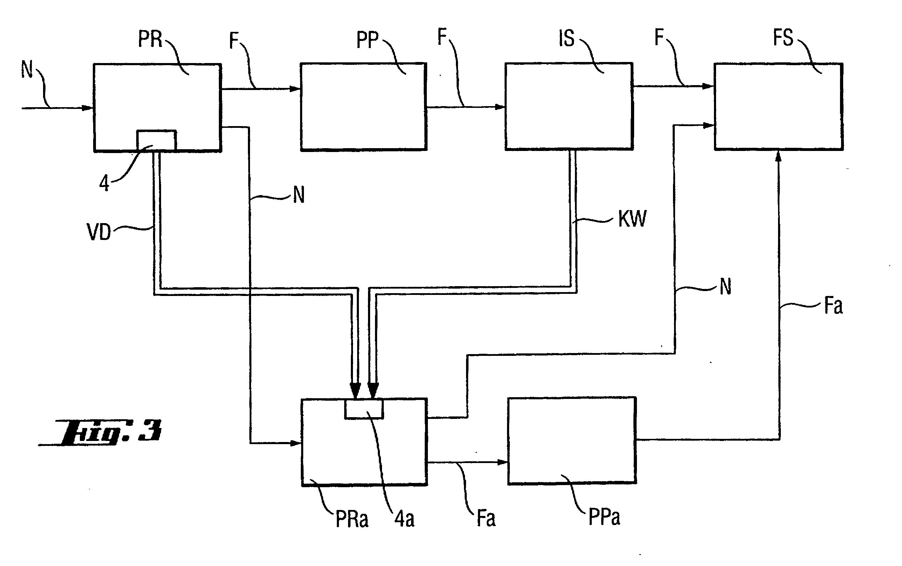

Fig. 3 zeigt in einer schematischen Blockdarstellung die wesentlichen Teile einer Verarbeitungsanlage zur Durchführung eines Ausführungsbeispiels des erfindungsgemässen Verfahrens zum Erstellen von fotografischen Kopien. Die Verarbeitungsanlage umfasst das erste fotografische Kopiergerät PR mit der Rechen- und Steuereinheit 4 sowie das zweite fotografische Kopiergerät PRa mit der Rechen- und Steuereinheit 4a. Beispielsweise ist das erste Kopiergerät PR ein Hochleistungsprinter und das zweite Kopiergerät PRa ein Minilab. Den beiden Kopiergeräten ist jeweils einer der beiden Papierprozessoren PP bzw. PPa nachgeschaltet. Die Papierprozessoren PP, PPa können jeweils mit den zugehörigen Kopiergeräten PR, PRa eine bauliche Einheit bilden oder aber als separate Geräte vorgesehen sein. Ferner umfasst die Verarbeitungsanlage eine Inspektionsstation IS, in welcher die Erstkopien inspiziert werden, sowie eine Schneide- und Verpackungsstation FS. Die mit den Bezugszeichen N versehenen Pfeile deuten an, wie die Negativfilme mit den Kopiervorlagen die Verarbeitungsanlage durchlaufen. Diese Darstellung ist natürlich symbolisch zu verstehen. Üblicherweise werden insbesondere bei der Verwendung von Hochleistungsprintern zunächst eine grosse Anzahl von Negativfilmstreifen zu einem langen, zusammenhängenden Filmband gespleisst, welches beispielsweise auf einer Rolle aufgewickelt wird. Diese Rolle wird eingangsseitig des ersten Kopiergeräts PR angedockt und das Filmband in das Kopiergerät PR eingespeist. Ausgangsseitig des Kopiergeräts PR kann das Filmband beispielsweise wieder auf eine Rolle gewickelt werden und diese dann zum zweiten Kopiergerät PRa transportiert werden. Auch solche Vorgehensweisen werden durch die symbolische Darstellung mittels der Pfeile N umfasst. In analoger Weise deuten die mit den Bezugszeichen F bzw. Fa versehenen Pfeile symbolisch an, wie das Kopiermaterial (Fotopapier) die Verarbeitungsanlage durchläuft. Die mit den Bezugszeichen VD und KW bezeichneten Doppelpfeile symbolisieren jeweils einen Datenfluss, nämlich von vorlagenspezifischen Daten (Doppelpfeil VD) und von Korrekturwerten (Doppelpfeil KW).

Bei der Beschreibung des Ausführungsbeispiels des erfindungsgemässen Verfahrens wird davon ausgegangen, dass zum einen das erste Kopiergerät PR kalibriert ist und zum anderen das zweite Kopiergerät PRa auf das erste Kopiergerät PR kalibriert ist. Diese Kalibrierungen können beispielsweise wie vorne detailliert beschrieben durchgeführt werden. Ferner wird beispielhaft auf den Fall Bezug genommen, dass die zu kopierenden Negativfilme zu einem Filmband zusammengespleisst sind, welches auf einer Rolle aufgewickelt ist.

Es werden nun zunächst im Erstdurchgang mittels des ersten Kopiergerätes PR die fotografischen Erstkopien wie bereits vorne beschrieben erstellt. Dabei wird jedes Bildfeld (Kopiervorlage) bereichsweise, bevorzugt punktweise, mit Messlicht abgetastet, und aus dem von dem jeweiligen Bildfeld transmittierten Messlicht der zugehörige Vektor $\underline{\Delta k}$ mit den KLT-Koeffizienten als vorlagenspezifischen Daten bestimmt und abgespeichert. Aus dem Vektor $\underline{\Delta k}$ werden mit Hilfe des papierbezogenen Filmmodells (Belichtungsmatrix) die für die Aufbelichtung dieser Kopiervorlage erforderlichen Kopierlichtmengen bestimmt, und die jeweilige Kopiervorlage mit den ermittelten Kopierlichtmengen auf das Fotopapier F (Kopiermaterial) aufbelichtet. Ausgangsseitig des ersten Kopiergerätes werden die gespleissten Negativfilme beispielsweise wieder auf eine Rolle aufgewickelt. Das belichtete Fotopapier, das üblicherweise auch in Form eines langen Bandes vorliegt, wird in dem nachgeschalteten Papierprozessor PP entwickelt. Die auf diese Weise erstellten Erstkopien werden in der Inspektionsstation IS einer visuellen Inspektion durch das Bedienungspersonal unterzogen und es wird entschieden, ob die Bildqualität der Erstkopie ausreichend ist oder ob von der zugehörigen Kopiervorlage eine Zweitkopie erstellt werden muss. Gegebenenfalls bestimmt das Bedienungspersonal Korrekturwerte KW für die Erstellung der Zweitkopien. Diese Korrekturwerte KW sind beispielsweise Änderungen in der Papierdichte, d. h. das Bedienugspersonal entscheidet anhand der Erstkopie, welche Änderung in der Papierdichte, beschrieben durch den Vektor $\underline{\Delta d}$, wünschenswert ist, damit die Zweitkopie eine bessere Bildqualität aufweist als die Erstkopie. Das Bedienungspersonal kann beispielsweise die unbefriedigenden Erstkopien, z. B. mit einem Fettstift oder durch Aufbringen von Klebeetiketten, markieren. Auch ist es möglich die gewünschten Korrekturwerte direkt, z. B. mit einem Fettstift, auf die zugehörige Erstkopie zu schreiben. Es ist aber auch möglich, die Markierung der unbefriedigenden Erstkopien auf elektronischem Wege durchzuführen, z. B. durch eine entsprechende Eingabe über eine Tastatur, und die gewünschten Korrekturwerte über eine Tastatur als elektronische Daten zu erfassen.

Solche Inspektionen bzw. die Bestimmung von Korrekturwerten sind hinreichend bekannt und werden deshalb nicht näher erläutert. Üblicherweise stehen dem Bedienungspersonal teilweise automatisierte und/oder computerunterstützte Maschinen zur Verfügung, welche die zur Inspektion und zur Bestimmung der Korrekturwerte KW nötigen Arbeitsschritte vereinfachen. Die Korrekturwerte, also beispielsweise die Vektoren $\underline{\Delta d}$, werden zusammen mit Kennzeichnungsdaten, anhand derer bestimmbar ist, auf welche Kopiervorlage sich die jeweiligen Korrekturwerte KW (Vektoren $\underline{\Delta d}$) beziehen, an die Rechen- und Steuereinheit 4a des zweiten Kopiergerätes PRa übermittelt. Dies kann beispielsweise über eine Datenleitung zwischen der Inspektionsstation IS und dem zweiten Kopiergerät PRa erfolgen, oder mittels einer Tastatur, über welche die Daten in die Rechen- und Steuereinheit 4a des zweiten Kopiergerätes PRa eingespeist werden.

Die Erstkopien, welche bereits eine befriedigende Bildqualität aufweisen, werden zur Schneide- und Verpakkungsstation FS transportiert, wo die einzelnen Papierbilder auf dem Fotopapierband geschnitten werden.

Die ausgangsseitig des ersten Kopiergeräts PR angedockte Rolle, auf welcher sich die im Erstdurchgang bereits bearbeiteten Kopiervorlagen befinden, wird, beispielsweise wenn sie gefüllt ist, vom Ausgang des ersten Kopiergerätes PR gelöst und für den Zweitdurchgang eingangsseitig des zweiten Kopiergeräts PRa angedockt. Die im Erstdurchgang bestimmten vorlagenspezifischen Daten - also die Vektoren $\underline{\Delta k}$ -, welche in der Rechen- und Steuereinheit 4 des ersten Kopiergeräts PR gespeichert wurden, werden, gegebenenfalls zusammen mit Identifizierungsdaten, anhand derer sich feststellen lässt, auf welches Bildfeld sich der jeweilige Vektor $\underline{\Delta k}$ bezieht, an die Rechen- und Steuereinheit 4a des zweiten Kopiergerätes PRa übertragen. Diese Übertragung kann beispielsweise mittels einer Datenleitung erfolgen.

Während des Zweitdurchgangs werden nun die Kopiervorlagen in der Messtation 1a (Fig. 1) des zweiten Kopiergeräts nicht mehr neu spektral vermessen, so dass diese Messstation 1a eigentlich nicht benötigt wird. Da sie aber üblicherweise in Kopiergeräten sowieso vorhanden ist, kann sie vorteilhaft dazu genutzt werden, die Identität der einzelnen Kopiervorlagen zu überprüfen. Für die Berechnung der Kopierlichtmengen für den Zweitdurchgang verfügt die Rechen- und Steuereinheit 4a des zweiten Kopiergeräts gemäss vorne Gesagtem über folgende Informationen: Sie "weiss", von welchen Kopiervorlagen Zweitkopien erstellt werden sollen, und sie "kennt" die jeweils zugehörigen vorlagenspezifischen Daten in Form der Vektoren $\underline{\Delta k}$ sowie die jeweils zugehörigen Korrekturwerte in Form der Vektoren $\underline{\Delta d}$. In der Rechen- und Steuereinheit 4a des zweiten Kopiergeräts PRa werden nun für diejenigen Kopiervorlagen, von denen Zweitkopien zu erstellen sind, jeweils mit Hilfe des zugehörigen Vektors $\underline{\Delta k}$, der aus dem Erstdurchgang stammt, und mit Hilfe des papierbezogenen Filmmodells (Belichtungsmatrix) für das zweite Kopiergerät PRa der Vektor $\underline{\Delta b}'$ bestimmt, welcher zwar die Belichtungskorrektur beschreibt, aber die gewünschten Korrekturwerte (Vektor $\underline{\Delta d}$) noch nicht berücksichtigt. Ferner wird der jeweils zugehörige Korrekturwert (Vektor $\underline{\Delta d}$) mittels des inversen Papiermodells (inverse Papiermatrix) in ein Belichtungskorrekturwert, beschrieben durch den Vektor $\underline{\Delta b}''$, transformiert. Mittels dieser beiden Vektoren $\underline{\Delta b}'$ und $\underline{\Delta b}''$ lassen sich nun für das zugehörige Bildfeld (Kopiervorlage) die Kopierlichtmengen für den Zeitdurchgang ermitteln. Mit diesen Kopierlichtmengen, die folglich die gewünschte Korrektur berücksichtigen, erfolgt im Zweitdurchgang die Aufbelichtung des Bildfeldes auf das Fotopapier.

Ausgangsseitig des zweiten Kopiergeräts PRa werden die gespleissten Negativfilme beispielsweise wieder auf eine Rolle aufgewickelt, die anschliessend zu der Schneide- und Verpackungsstation FS transportiert wird. Das belichtete Fotopapier, das beispielsweise auch in Form eines langen Bandes vorliegt (Pfeil Fa in Fig. 3) wird in dem nachgeschalteten Papierprozessor PPa entwickelt. Anschliessend werden die entwickelten Zweitkopien Fa ebenfalls zur Schneide- und Verpackungsstation FS transportiert. In der Schneide- und Verpackungsstation FS werden die einzelnen im Zweitdurchgang erstellten Papierbilder auf dem Fotopapierband geschnitten, ferner wird das Filmband mit den Negativfilmen in kurze Streifen - üblicherweise à vier Bildfelder - geschnitten, die Erst-, Zweitkopien sowie die Negativfilmstreifen werden nach Aufträgen sortiert und jeweils zusammen in Auftragstaschen verpackt.

Es versteht sich, dass es auch möglich ist, nach dem Zweitdurchgang eine Inspektion der Zweitkopien durchzuführen, um z. B. zu ermitteln, ob die Korrekturwerte die gewünschte Verbesserung in der Bildqualität der Zweitkopie bewirkt haben, und gegebenenfalls noch weitere Kopierdurchgänge durchzuführen.

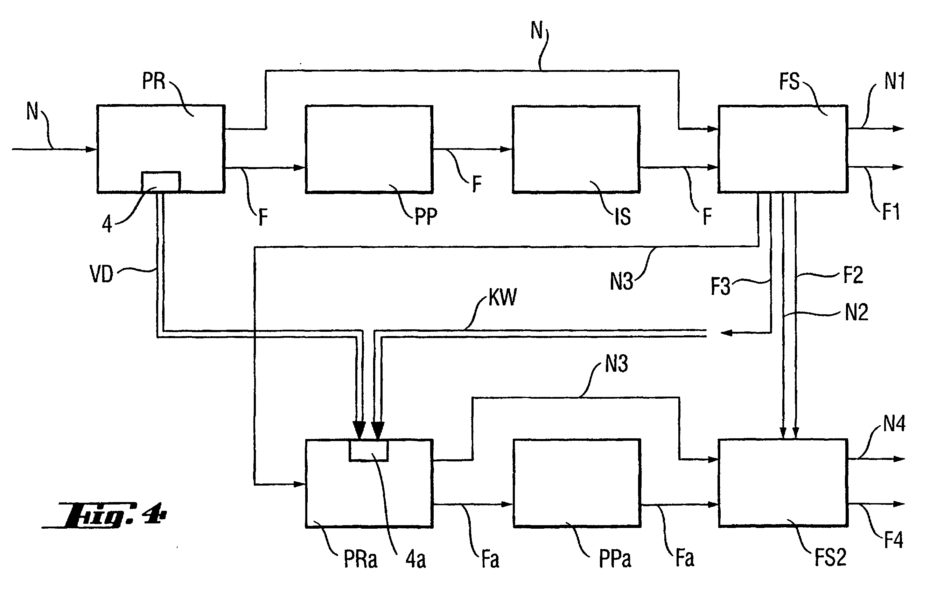

Anhand von Fig. 4 wird nun noch eine Variante des Ausführungsbeispiels des erfindungsgemässen Verfahrens beschrieben. Die in Fig. 4 mittels einer schematischen Blockdarstellung gezeigte Verarbeitungsanlage entspricht weitgehend der in Fig. 3 dargestellten. Gleiche oder von der Funktion her gleichwertige Teile sind in den Fign. 3 und 4 mit den gleichen Bezugszeichen versehen, die deshalb hier nicht nochmals erläutert werden. Die folgenden Ausführungen beschränken sich auf die Unterschiede dieser Variante. Ansonsten haben die voranstehenden Erklärungen bezüglich des Ausführungsbeispiels des erfindungsgemässen Verfahrens auch für die Variante Gültigkeit.

Bei dieser Variante werden die gespleissten Negativfilme, die nach dem Erstellen der Erstkopien ausgangsseitig des ersten Kopiergeräts PR auf eine Rolle aufgewickelt werden, nach dem Erstdurchgang zunächst der Schneide- und Verpackungsstation FS zugeführt, wo sie in kurze Negativstreifen - üblicherweise à vier Bildfelder - geschnitten werden.

Die entwickelten Erstkopien gelangen, typischerweise in Form eines langen Fotopapierbandes aus dem Papierprozessor PP in die Inspektionsstation IS, wo sie inspiziert werden. Bei dieser Variante werden aber die Korrekturwerte vom Bedienungspersonal erst später bestimmt. In der Inspektionsstation wird zunächst nur entschieden, ob von der jeweils zugehörigen Kopiervorlage eine Zweitkopie erstellt werden soll oder ob die Erskopie von befriedigender Qualität ist. Dabei werden die Erstkopien, die nicht von befriedigender Qualität sind, markiert. Diese Markierung kann direkt auf der Erstkopie erfolgen, beispielsweise mittels eines Fettstifts oder mittels Klebeetiketten, die auf die unbefriedigende Erstkopien aufgebracht werden. Es ist aber auch möglich zusätzlich oder statt dessen einen elektronischen "Vermerk" vorzusehen, d. h. die zu korrigierenden Erstkopien datenmässig zu erfassen. Die Erstkopien werden dann ebenfalls zu der Schneide- und Verpackungsstation FS transportiert, wo die einzelnen Papierbilder auf dem Fotopapierband geschnitten werden und die nicht befriedigenden Erstkopien ausgesondert werden. Falls ein kompletter Kundenauftrag, also z. B ein kompletter Negativfilm, keiner Zweitkopien bedarf, so werden die zugehörigen Negativstreifen zusammen mit den zugehörigen Papierbildern in ein Auftragstasche verpackt, und die Bearbeitung dieses Kundenauftrages ist beendet. Dieser Fall ist in Fig. 4 symbolisch durch die Pfeile mit den Bezugszeichen F1 und N1 angedeutet. Ist dagegen bei einem kompletten Kundenauftrag zumindest eine Erstkopie erstellt worden, die in der Inspektionsstation IS als von nicht befriedigender Qualität beurteilt und folglich markiert wurde, so werden sämtliche Negativstreifen des Negativfilms sowie sämtliche Erstkopien, die zu diesem Kundenauftrag gehören wie folgt behandelt: Diejenigen Erstkopien dieses Kundenauftrages, die von befriedigender Qualität sind, werden zu einer zweiten Schneide- und Verpackungsstation FS2 transportiert, wie dies der Pfeil mit dem Bezugszeichen F2 in Fig. 4 symbolisch andeutet. Auch diejenigen Negativstreifen mit den jeweils z. B. vier Bildfeldern, auf denen sich nur Bildfelder befinden, die im Erstdurchgang zu befriedigenden Erstkopien geführt haben, werden zu der zweiten Schneide- und Verpackungsstation FS2 transportiert, wie dies der Pfeil mit dem Bezugszeichen N2 in Fig. 4 symbolisch andeutet. Die nicht befriedigenden Erstkopien werden ausgesondert (Pfeil F3) und für jede nicht befriedigende Erstkopie werden vom Bedienungspersonal, analog wie bereits erläutert, Korrekturwerte, z. B. die Vektoren $\underline{\Delta d}$, bestimmt (Doppelpfeil KW). Diese Korrekturwerte werden z. B. über eine Tastatur in die Rechen- und Steuereinheit 4a des zweiten Kopiergeräts PRa eingegeben. Diejenigen Negativstreifen à 4 Bildfelder, auf denen sich die Bildfelder befinden, die zu den nicht befriedigenden Erstkopien gehören, werden dem zweiten Kopiergerät PRa zugeführt (Pfeil N3). Optional ist es natürlich auch möglich, die einzelnen Negativstreifen, bevor sie in das zweite Kopiergerät PRa eingebracht werden, neu zu spleissen. Nun wird in analoger Weise wie vorne beschrieben der Zweitdurchgang mittels des zweiten Kopiergeräts PRa durchgeführt. Dabei werden wiederum zur Bestimmung der erforderlichen Kopierlichtmengen für das jeweilige Bildfeld in der Rechen- und Steuereinheit 4a des zweiten Kopiergeräts PRa die vorlagenspezifischen Daten, die im Erstdurchgang für das jeweilige Bildfeld ermittelt wurden, also der zu dem jeweiligen Bildfeld gehörende Vektor $\underline{\Delta k}$ mit den KLT-Koeffizienten, sowie die vom Bedienungspersonal bestimmten Korrekturwerte (Vektor $\underline{\Delta d}$) verwendet. Die Zweitkopien Fa werden in dem Papierprozessor PPa entwickelt und anschliessend in die zweite Schneide- und Verpackungsstation FS2 transportiert. Die Negativstreifen werden nach dem Zweitdurchgang ebenfalls der zweiten Schneide- und Verpackungsstation FS2 zugeführt (Pfeil N3), wo sie im Falle, dass sie vor dem Zweitdurchgang neu gespleisst wurden, wieder in die Negativstreifen à vier Bildfelder getrennt werden. In der zweiten Schneide- und Verpackungsstation FS2 werden die Erstund die Zweitkopien sowie die zugehörigen Negativstreifen nach Kundenaufträgen sortiert und in Auftragstaschen verpackt. Damit ist die Bearbeitung des Kundenauftrages beendet, wie dies symbolisch durch die Pfeile N4 und F4 angedeutet ist.

Es versteht sich, dass bei dem erfindungsgemässen Verfahren nicht notwendigerweise die Vektoren $\underline{\Delta k}$ mit den KLT-Koeffizienten als vorlagenspezifische Daten verwendet werden müssen. Zwar ist die Verwendung der KLT-Koeffizienten besonders bevorzugt, es können aber auch andere Grössen, die repräsentativ für die Dichteverteilung der individuellen Kopiervorlage sind, als vorlagenspezifische Daten bei dem erfindungsgemässen Verfahren verwendet werden. Beispielsweise können auch die Dichten der Kopiervorlagen in den drei Grundfarben Blau, Grün, Rot, die mit konventionellen Scannern bestimmbar sind, als vorlagenspezifische Daten verwendet werden, oder zur Bestimmung von vorlagenspezifischen Daten herangezogen werden.

Für das Kalibrieren des ersten Kopiergeräts bzw. für das Kalibrieren des zweiten Kopiergeräts auf das erste Kopiergerät müssen nicht notwendigerweise die vorne beschriebenen speziellen Testfilme verwendet werden. Es ist auch möglich diese Kalibrierungen - also im wesentlichen die Bestimmung bzw. die Optimierung der Papiermodelle und der papierbezogenen Filmmodelle - anhand von Produktionsnegativen durchzuführen. Mit Produktionsnegativen sind dabei solche Negative gemeint, die im normalen Betrieb, z. B. bei der Bearbeitung von Kundenaufträgen, anfallen. Im folgenden soll nun noch eine mögliche Vorgehensweise beschrieben werden, wie die Kalibrierung der beiden Kopiergeräte anhand von Produktionsnegativen beispielsweise durchgeführt werden können.

Zunächst wird das erste Kopiergerät kalibriert, d. h für dieses werden die Belichtungsmatrix, die als Beispiel für das papierbezogenen Filmmodell steht, sowie das Papiermodell bzw. das dazu inverse Modell (inverses Papiermodell) bestimmt respektive optimiert. Während des Kalibrierens müssen die von den Produktionsnegativen erstellten Erstkopien (Papierbilder) densitometrisch ausgemessen werden. Dieses Ausmessen erfolgt bevorzugt mittels eines Densitometers, welches sich am Ausgang des dem ersten Kopiergeräts nachgeschalteten Papierprozessor befindet und welches die entwickelten Papierbilder "on-line" ausmisst. Dazu werden die entwickelten Papierbilder bereichsweise, vorzugsweise punktweise, abgetastet, das von jedem Abtastbereich des jeweiligen Papierbildes remittierte Messlicht einer Detektoranordnung zugeführt, spektral zerlegt und in wellenlängen- und intensitätsabhängige elektrische Messsignale umgesetzt. Die elektrischen Messsignale werden digitalisiert und zur Ermittlung kopiespezifischer Daten, welches bevorzugt die Papierdichtevektoren $\underline{d}_n$ (der Index "n" soll anzeigen, dass es sich um den Vorgang der Kalibrierung handelt) sind, ausgewertet.

Bei der Verwendung von Produktionsnegativen zur Kalibrierung kann beispielsweise so vorgegangen werden, wie es mit Hilfe von Fig. 8 nachfolgend erläutert wird. Hierzu sind in Fig. 8 ein Negativ eines Negativfilms N und eine davon auf Fotopapier F erstellte Erstkopie dargestellt. Auf dem Negativ sind die einzelnen Negativ-Messpunkte N-MP angedeutet (in Realität ist die Auflösung viel feiner, eine solche Darstellung würde jedoch zu zeichnerischen Problemen führen). Auf der davon auf dem Fotopapier F erstellten Erstkopie sind die Abbildungen F-MP der Negativ-Messpunkte N-MP angedeutet. Ferner ist eine Messspur OLD-MS des Densitometers, welches sich am Ausgang des dem ersten Kopiergerät nachgeschalteten Papierprozessors PP (Fig. 1) befindet und welches die entwickelten Papierbilder "online" ausmisst, dargestellt. Die dargestellte Messspur OLD-MS verläuft gerade längsmittig, die Wahl einer anderen Messspur wäre aber ebensogut möglich. Ausserdem sind in Fig. 8 einige Messpunkte OLD-MP längs dieser Messspur OLD-MS angedeutet. In einem Kopiergerät ist die Auflösung der Messpunkte auf dem Negativ, auf dem Papierbild, sowie die beim Kopieren verwendete Vergrösserung bekannt. Ferner ist auch bekannt, welcher Punkt des Negativs auf das Zentrum des Papierbildes abgebildet wird. Damit ist eine eindeutige Zuordnung möglich und es können zu jedem Messpunkt OLD-MP auf dem Papierbild eine Anzahl, z. B. vier, Messpunkte N-MP auf dem Negativ ermittelt werden, die diesem Messpunkt auf dem Papierbild am nächsten liegen. Betrachtet man als Beispiel den Messpunkt OLD-MP am linken Rand des Papierbildes in Fig. 8, so sind die in Betracht kommenden vier Messpunkte N-MP auf dem Negativ diejenigen, die - von links betrachtet - den beiden ersten Abbildungen F-MP auf dem Papierbild in der jeweils ersten Zeile oberhalb und unterhalb der Messspur OLD-MS entsprechen. Die jeweiligen Messdaten (Filmdichte, Papierdichte, Kopierlicht sowie der zugehörige Filmtyp) werden für die spätere Auswertung abgespeichert. Bevor nun eine Reihe von Messdaten ausgewertet wird, wird überprüft, ob die Reihe von Daten von mehr als einer minimalen Anzahl verschiedner Filmtypen, z. B. von mehr als zehn verschiedenen Filmtypen stammt. Ausserdem wird geprüft, ob auch der von den Messdaten umfasste Bereich in Farbe und Dichte sowohl für die Filmdichten (für die Ermittlung des papierbezogenen Filmmodells) als auch für die Papierdichten (für die Ermittlung des Papiermodells) genügend gross ist. Sind einzelne Filmtypen von ihrer Anzahl her in der Reihe der Daten zu viel vertreten, so wird von diesem Filmtyp nur ein Teil der Messdaten für die Auswertung verwendet.

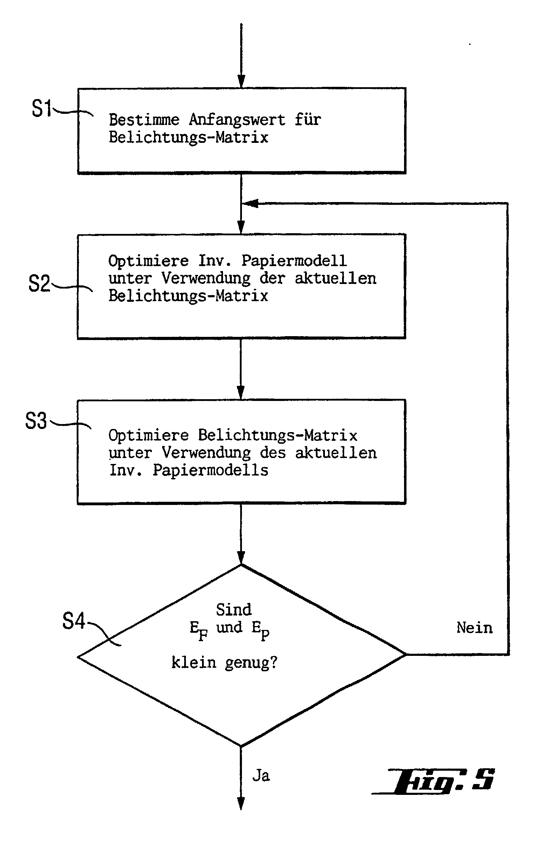

Die Vorgehensweise bei der Kalibrierung des ersten Kopiergerätes ist in Fig. 5 anhand eines Ablaufschemas verdeutlicht. Zunächst wird in einem ersten Schritt S1 ein erster Näherungswert als Anfangswert für die Belichtungsmatrix bestimmt. Dies kann beispielsweise wie vorne erläutert erfolgen (man geht davon aus, dass die spektralen Papierempfindlichkeiten sich auf drei diskrete Wellenlängen konzentrieren, usw.), oder es ist bereits ein Anfangswert für die Belichtungsmatrix bekannt. Unter Verwendung der jeweils aktuellen Belichtungsmatrix - zu Beginn ist dies der Anfangswert für die Belichtungsmatrix - werden nun Kopien von den für die Kalibrierung verwendeten Produktionsnegativen erstellt. Diese Kopien werden entwickelt und mittels des Densitometers, welches sich am Ausgang des dem ersten Kopiergeräts nachgeschalteten Papierprozessor befindet, analysiert. Somit sind für die Produktionsnegative, die zum Kalibrieren verwendet werden, die folgenden Grössen bekannt: die vorlagenspezifischen Daten in Form der Vektoren $\underline{k}_n$ (aus der Ausmessung der Negative), die sich daraus unter Verwendung der aktuellen Belichtungsmatrix ergebenden Filmdichtevektoren $\underline{f}_n$, die Papierdichtevektoren $\underline{d}_n$ sowie die Kopierlichtvektoren $\underline{e}_n$, die zu den Papierdichtevektoren geführt haben. Nun wird in einem zweiten Schritt S2 (Fig. 5) das inverse Papiermodell unter Verwendung der aktuellen Belichtungsmatrix, welche selbst in diesem Schritt S2 nicht verändert wird, optimiert. Dazu werden aus den bekannten Vektoren $\underline{k}_n$ für die Negativbildfelder und den ebenfalls bekannten Vektoren $\underline{e}_n$ für das jeweils verwendete Kopierlicht mit Hilfe der aktuellen Belichtungsmatrix E die Vektoren $\underline{b}_n$ gemäss der bereits erwähnten Beziehung:

$$\underline{b}_n = \underline{e}_n - E\,\underline{k}_n$$

berechnet. Andererseits sind die Vektoren $\underline{b}_n$ mit den - gemessenen und daher bekannten - Papierdichtevektoren $\underline{d}_n$ über die Beziehung:

$$\underline{b}_n = P^{-1}\,\underline{d}_n$$

verknüpft, wobei P den als Papiermodell verwendeten Operator bezeichnet, also im Falle eines linearen Papiermodells z. B. die Papiermatrix, und $P^{-1}$ den zu P inversen Operator, der als inverses Papiermodell verwendet wird. Mittels eines mathematischen Optimierungsverfahrens, beispielsweise mittels einer Ausgleichsrechnung, werden nun die Parameter des inversen Papiermodells bestimmt, für welche der Fehler

$$E_P = \frac{1}{n} \sum_{n} |P^{-1} \underline{\Delta d}_n - \underline{\Delta b}_n|^2 = \frac{1}{n} \sum_{n} |P^{-1} \underline{\Delta d}_n - \underline{\Delta e}_n + E \underline{\Delta k}_n|^2$$

minimal ist. Dabei bleibt die Belichtungsmatrix E unverändert. Ist das Inverse Papiermodell optimiert, wird in einem Schritt S3 die Belichtungsmatrix, wie bereits vorne detailliert beschrieben, optimiert, d. h. der Fehler

$$E_F = \frac{1}{n} \sum_{n} |\underline{\Delta b}_n^* - \underline{\Delta b}_n|^2$$

wird minimiert. Dabei wird das aktuelle (also das zuvor im Schritt S2 optimierte) inverse Papiermodell verwendet und dieses bleibt bei der Optimierung der Belichtungsmatrix unverändert. Anschliessend wird in einem Schritt S4 überprüft, ob die Fehler $E_F$ und $E_P$ klein genug sind, also einen vorgegebenen Schwellenwert unterschreiten (ob also die vorgebbaren Anforderungen an die Genauigkeit der Modelle erfüllt sind). Sofern dies nicht der Fall ist, wird die zuvor im Schritt S3 optimierte Belichtungsmatrix verwendet und das Inverse Papiermodell erneut optimiert, etc.. Diese Schleife wird so lange durchlaufen, bis die Modelle den Genauigkeitsanforderungen genügen, bis also die Fehler $E_F$ und $E_P$ klein genug sind, oder bis eine weitere Iteration keine Verbesserung mehr bringt.

Die beiden Modelle, das papierbezogenen Filmmodell (Belichtungsmatrix) und das Papiermodell bzw. das inverse Papiermodell, werden also abwechselnd solange optimiert, wobei das jeweils andere Modell konstant gehalten wird, bis die Fehler $E_F$ und $E_P$ klein genug sind, oder bis eine weitere Iteration keine Verbesserung mehr bringt. Ist dies erreicht so ist das erste Kopiergerät kalibriert.

Zur Kalibrierung des zweiten Kopiergerätes auf das erste Kopiergerät wird sinngemäss in der gleichen Weise unter Verwendung derselben Produktionsnegative vorgegangen, wie bei der Kalibrierung des ersten Kopiergerätes, wobei jedoch in dem zweiten Kopiergerät als vorlagenspezifische Daten diejenigen Vektoren $\underline{\Delta k}_n$ verwendet werden, die in dem eingetesteten ersten Kopiergerät bestimmt wurden. Es erfolgt also in dem zweiten Kopiergerät keine erneute Bestimmung dieser Vektoren $\underline{\Delta k}_n$. Als Kriterium dafür, dass das zweite Kopiergerät auf das erste kalibriert ist, dass also das Papiermodell und das papierbezogenen Filmmodell für das zweite Kopiergerät optimal sind, lässt sich die Bedingung verwenden, dass die mittels eines Densitometers, welches sich z. B. am Ausgang des dem zweiten Kopiergerät nachgeschalteten Papierprozessors befindet, bestimmten Papierdichtevektoren $\underline{\Delta d}_n$ der entwickelten Zweitkopien im wesentlichen gleich den Papierdichtevektoren der entsprechenden Erstkopien sind, die auf dem kalibrierten ersten Kopiergerät erstellt wurden.

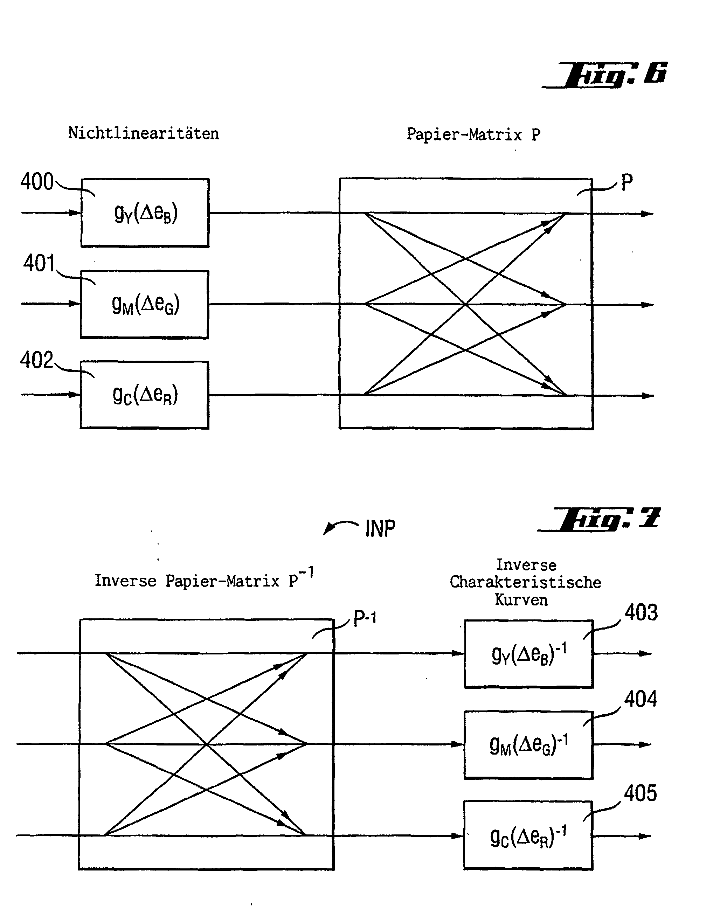

Für viele Anwendungen genügt für das Papiermodell in den beiden Kopiergeräten ein linearer Ansatz. In solchen Fällen kann das Papiermodell durch eine entsprechende Papiermatrix wiedergegeben werden. Der Gültigkeitsbereich eines solchen linearen Modells beschränkt sich jedoch auf eine bestimmte Umgebung um den Arbeitspunkt auf der charakteristischen Kurve für den jeweiligen Farbstoff. Ein genaueres Modell berücksichtigt hingegen auch die Nichtlinearität der charakteristischen Kurven. Ein solches nichtlineares Papiermodell, wie es in Fig. 6 dargestellt ist, lässt sich ebenfalls für das erfindungsgemässe Verfahren verwenden, und zwar sowohl in dem ersten als auch in dem zweiten Kopiergerät.

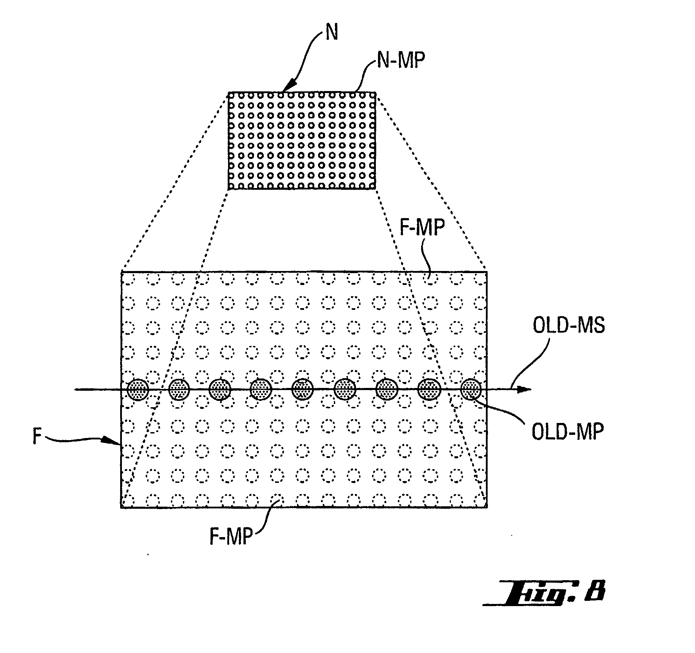

Gemäss Fig. 6 ist das Fotopapier derart modelliert, dass zunächst drei Kanäle 400,401,402 vorgesehen sind, die im wesentlichen die nichtlineare Konzentrationsänderung der Farbstoffe Yellow (Y), Magenta (M) und Cyan (C) in Abhängigkeit von der jeweiligen Belichtungsänderung in Blau ($\Delta e_B$), in Grün ($\Delta e_G$) und in Rot ($\Delta e_R$) wiedergeben, und zwar in Form von Abhängigkeiten $g_Y(\Delta e_B)$, $g_M(\Delta e_G)$ und $g_C(\Delta e_R)$. Daran anschliessend ist ein lineares Modell - eine Papiermatrix P - vorgesehen, welches einerseits die Nebenabsorptionen berücksichtigt und andererseits die Überlappungen der spektralen Papierempfindlichkeiten. Tatsächlich wird aber, wie vorne beschrieben, nicht das Papiermodell optimiert, sondern das inverse Papiermodell, wie es in Fig. 7 dargestellt und gesamthaft mit dem Bezugszeichen INP versehen ist. Die - ebenfalls nichtlinearen - inversen charakteristischen Kurven, die in den Kanälen 403,404,405 durch $g_Y(\Delta e_B)^{-1}$, $g_M(\Delta e_G)^{-1}$ und $g_C(\Delta e_R)^{-1}$ dargestellt sind, können beispielsweise als Potenzreihen dargestellt werden. Die Koeffizienten dieser Potenzreihen stellen dann, zusammen mit den Koeffizienten der inversen Papiermatrix $P^{-1}$, die zu optimierenden Parameter des Modells dar. Allerdings handelt es sich hier - im Unterschied zu dem papierbezogenen Filmmodell (der Belichtungsmatrix) - insgesamt um ein nichtlineares Modell. Die Optimierung dieses inversen Papiermodells INP kann nun sowohl für das erste als auch für das zweite Kopiergerät in analoger Weise, wie vorne erläutert, ablaufen.

Es werden eine Anzahl n der homogenen, aber unterschiedlich belichteten Negativbildfelder, die sich auf den vorne erwähnten Testfilmen befinden, oder aber auch n Produktionsnegative, für welche die Vektoren $\underline{\Delta k}_n$ mit den KLT-Koeffizienten bestimmt werden (im zweiten Kopiergerät werden natürlich wieder die im ersten Kopiergerät bestimmten $\underline{\Delta k}_n$ verwendet), mit vorgegebenen Kopierlichtabweichungen $\underline{\Delta e}_n$ kopiert und die resultierenden Dichteabweichungen $\underline{\Delta d}_n$ der zugehörigen Papierbilder (Kopien) mit Hilfe des Densitometers am Ausgang des Papierprozessors gemessen. Vom Prinzip her ist es - sofern man Testfilme verwendet - auch möglich, nur ein einziges Test-Negativ zu verwenden und mit unterschiedlichen Kopierlichtabweichungen $\underline{\Delta e}_n$ zu beaufschlagen. Statt eines Negativs kann wiederum auch ein Testfilter verwendet werden, dessen spektrale Dichte in etwa einem normalen Negativ entspricht. Die Kopierlichtabweichungen $\underline{\Delta e}_n$ wählt man so, dass die resultierenden Papierdichteabweichungen $\underline{\Delta d}_n$ den gesamten Bereich, in welchem das Modell gültig sein soll, abdecken. Die Belichtungsmatrix E bleibt bei der Optimierung des Inversen Papiermodells INP unverändert. Aus der Kenntnis der Vektoren $\underline{\Delta k}_n$, der Belichtungsmatrix E und der verwendeten Kopierlichtabweichungen $\underline{\Delta e}_n$ lassen sich die Belichtungsabweichungen $\underline{\Delta b}_n$ bestimmen, welche die gemessenen Papierdichteabweichungen $\underline{\Delta d}_n$ verursacht haben. Mittels eines mathematischen Optimierungsverfahrens werden nun die Parameter des inversen Papiermodells INP bestimmt, für welche der Fehler

$$E_P \;=\; \frac{1}{n} \sum_n \; |\underline{\Delta b}_n{}^{*} - \underline{\Delta b}_n|^2 \;=\; \frac{1}{n} \sum_n \; |-\underline{\Delta e}_n + E\,\underline{\Delta k}_n|^2$$

minimal wird. Hierbei bezeichnen die Vektoren $\underline{\Delta b}_n{}^{*}$ wieder die Belichtungsabweichungen, die sich aus der Anwendung des inversen Papiermodells INP auf die bekannten Papierdichtevektoren $\underline{\Delta d}_n$ ergeben. Da es sich - wie oben bereits erläutert - bei dem Inversen Papiermodell INP um ein nichtlineares Modell handelt, muss dazu ein iteratives Verfahren zur nichtlinearen Optimierung verwendet werden (siehe z.B. R. Fletcher: "Practical Methods of Optimization", Vol. 1+2, John Wiley & Sons).

**Patentansprüche**

1. Verfahren zum Erstellen von fotografischen Kopien von fotografischen Kopiervorlagen, bei welchem fotografische Erstkopien von den fotografischen Kopiervorlagen in einem Erstdurchgang in einem ersten fotografischen Kopiergerät (PR) erstellt werden, und bei welchem erforderliche fotografische Zweitkopien in einem Zweitdurchgang in einem zweiten fotografischen Kopiergerät (PRa) erstellt werden, wobei der Erstdurchgang mittels des ersten Kopiergeräts (PR) die folgenden Verfahrensschritte umfasst:

    a) die Kopiervorlage wird in einer Messstation (1) des ersten Kopiergeräts bereichsweise, vorzugsweise punktweise, abgetastet;

    b) das von jedem Abtastbereich der Kopiervorlage transmittierte oder remittierte Messlicht wird einer Detektoranordnung (2) zugeführt, spektral zerlegt und in wellenlängen- und intensitätsabhängige elektrische Messignale umgesetzt;

    c) die elektrischen Messignale werden digitalisiert und zur Ermittlung vorlagenspezifischer Daten ausgewertet,

    d) mit Hilfe der ermittelten vorlagenspezifischen Daten und mit Hilfe eines dem Kopiermaterial angepassten Vorlagenmodells (20;20a), welches repräsentativ für das Verhalten des Kopiermaterials (F) bei Änderungen der spektralen Zusammensetzung der Kopiervorlage (N) ist, werden in einer Rechen- und Steuereinheit (4) des ersten Kopiergeräts (PR) die für die Aufbelichtung erforderlichen Kopierlichtmengen ermittelt,

    e) aus den ermittelten Kopierlichtmengen werden Steuersignale für in der Kopierstation (5) des ersten Kopiergeräts (PR) vorgesehenen Farbfilter und Verschlüsse (7) ermittelt, welche nach Massgabe der Steuersignale beim Aufkopieren der Kopiervorlage (N) auf das Kopiermaterial (F) in den Kopierstrahlengang eingebracht werden,

    f) die auf diese Weise erstellten Erstkopien werden in einer Entwicklungsstation (PP) entwickelt, **dadurch gekennzeichnet, dass** das zweite Kopiergerät (PRa) mittels eines Eintestverfahrens auf das erste Kopiergerät (PR) kalibriert wird, wobei das Eintestverfahren die folgenden Verfahrensschritte umfasst:

g) die im Erstdurchgang mittels des ersten fotografischen Kopiergeräts (PR) ermittelten vorlagenspezifischen Daten werden einer Rechen- und Steuereinheit (4a) des zweiten Kopiergeräts (PRa) zugeführt,

h) mit Hilfe der vorlagenspezifischen Daten und mit Hilfe eines dem Kopiermaterial angepassten Vorlagenmodells (20;20a), welches repräsentativ für das Verhalten des Kopiermaterials (Fa) bei Änderungen der spektralen Zusammensetzung der Kopiervorlage (N) ist, werden in der Rechen- und Steuereinheit (4a) des zweiten Kopiergeräts (PRa) die für die Aufbelichtung erforderlichen Kopierlichtmengen ermittelt,

i) aus den ermittelten Kopierlichtmengen werden Steuersignale für in der Kopierstation (5a) des zweiten Kopiergeräts (PRa) vorgesehenen Farbfilter und Verschlüsse (7a) ermittelt, welche nach Massgabe der Steuersignale beim Aufkopieren der Kopiervorlage (N) auf das Kopiermaterial (Fa) in den Kopierstrahlengang eingebracht werden,

j) die auf diese Weise erstellten Zweitkopien werden in einer Entwicklungsstation (PPa) entwickelt und anschliessend einer Analyse unterzogen,

k) basierend auf der Analyse wird das dem Kopiermaterial angepasste Vorlagenmodell (20;20aa) für das zweite Kopiergerät (PRa) solange optimiert, bis die Zweitkopien im wesentlichen gleich den Erstkopien sind.

2. Verfahren nach Anspruch 1, **dadurch gekennzeichnet, dass** bei dem Eintestverfahren zur Kalibrierung des zweiten Kopiergerätes (PRa) auf das erste Kopiergerät (PR) die entwickelten Zweitkopien bereichsweise, vorzugsweise punktweise, abgetastet werden, das von jedem Abtastbereich der Zweitkopien transmittierte oder remittierte Messlicht einer Detektoranordnung zugeführt, spektral zerlegt, in wellenlängen- und intensitätsabhängige elektrische Messsignale umgesetzt wird, die elektrischen Messsignale digitalisiert und zur Ermittlung kopiespezifischer Daten ausgewertet werden, und mit Hilfe der kopiespezifischen Daten das dem Kopiermaterial angepasste Vorlagenmodell (20;20aa) für das zweite Kopiergerät (PRa) optimiert wird, wobei die in dem Erstdurchgang bestimmten vorlagenspezifischen Daten unverändert bleiben.

3. Verfahren nach einem der vorangehenden Ansprüche, **dadurch gekennzeichnet, dass** die entwickelten Erstkopien jeweils einer Inspektion (IS) unterzogen werden, bei der entschieden wird, ob von der jeweils zugehörigen Kopiervorlage eine Zweitkopie erstellt wird und bei der gegebenenfalls Korrekturwerte für die Erstellung der Zweitkopie bestimmt werden, dass ferner die Kopiervorlagen, von denen die Zweitkopien erstellt werden, sowie die jeweils zugehörigen Korrekturwerte dem zweiten Kopiergerät (PRa) zugeführt werden und die Korrekturwerte in der Rechen- und Steuereinheit (4a) des zweiten Kopiergerätes (PRa) in Belichtungskorrekturwerte transformiert werden, die zusammen mit den vorlagenspezifischen Daten aus dem Erstdurchgang zur Bestimmung der Kopierlichtmengen für die Erstellung der jeweiligen Zweitkopie herangezogen werden.

4. Verfahren nach einem der vorangehenden Ansprüche, **dadurch gekennzeichnet, dass** die aus der spektralen Messung der Kopiervorlage im Erstdurchgang resultierenden und anschliessend digitalisierten Messsignale einer vorzugsweise orthogonalen Transformation bzw. Datenkompression, vorzugsweise der Karhunen-Loève-Transformation, unterzogen werden, und dass aus dieser Transformation hervorgehende Transformationskoeffizienten die vorlagenspezifischen Daten bilden, welche sowohl als Eingangsgrössen für das Vorlagenmodell (20;20a) beim Erstdurchgang in dem ersten Kopiergerät (PR) als auch als Eingangsgrössen für das Vorlagenmodell (20;20aa) beim Zweitdurchgang in dem zweiten Kopiergerät (PRa) verwendet werden.

5. Verfahren nach einem der vorangehenden Ansprüche, **dadurch gekennzeichnet, dass** für das Eintestverfahren zur Kalibrierung des zweiten Kopiergerätes (PRa) auf das erste Kopiergerät (PR) Produktionsnegative verwendet werden.

## Claims

1. Process for producing photographic copies (prints) from photographic originals in which photographic first prints are prepared from the photographic originals in an initial run on a first photographic copying (printing) machine (PR) and in which any required photographic second (duplicate) prints are prepared in a second run on a second photographic copying (printing) machine (PRa), whereby the first run using the first printing machine (PR) comprises the following process steps:

a) the original to be copied is scanned region-by-region, preferably point-by-point, in a measuring station (1) of the first printing machine;

b) the measurement light transmitted or reflected by each scan region of the original to be copied is conveyed to a detector arrangement (2), is analysed spectrally and is converted into electrical measurement signals depending on wavelength and intensity;

c) the electrical measurement signals are digitised and evaluated to determine data specific to the original image,

d) using the determined data specific to the original image, and using a model original image (20; 20a) adapted to the copying (printing) material and which is representative of the properties of the copying material (F) as the spectral composition of the original to be printed (N) varies, the amounts of printing light required for exposure are determined in a computing and control unit (4) of the first copying machine (PR),

e) from the amounts of printing light determined, control signals for colour filters and shutters (7) provided in the printing station (5) of the first printing machine (PR) are determined and, governed by the control signals when printing up the original to be copied (N), are applied to the printing material (F) in the printer beam path,

f) original prints produced in this way are developed in a development station (PP),
**characterised in that** the second printing machine (PRa) is calibrated to the first printing machine (PR) using an initial test method whereby the initial test method comprises the following process steps:

g) the data specific to the original image determined in the first run using the first photographic printing machine (PR) are fed into a computing and control unit (4a) of the second printing machine (PRa),

h) using the data specific to the original image and with the aid of a model original image (20; 20a) matched to the printing material and which is representative of the properties of the copying material (Fa) as the spectral composition of the original to be printed (N) varies, the amounts of printing light required for exposure are determined in a computing and control unit (4a) of the second copying machine (PRa),

i) from the amounts of printing light determined, control signals for colour filters and shutters (7a) provided in the printing station (5a) of the second printing machine (PRa) are determined and, governed by the control signals when printing up the original to be copied (N), are applied to the printing material (Fa) in the printer beam path,

j) the second (duplicate) prints produced in this way are developed in a development station (PPa) and afterwards subjected to analysis,

k) based on the analysis, the model original image (20; 20aa) matched to the copying material for the second printing machine (PRa) is optimised until the second copies are essentially identical to the first copies.

2. Process according to Claim 1, **characterized in that**, during the initial test procedure to calibrate the second printing machine (PRa) to the first printing machine (PR), the developed second (duplicate) copies are scanned region-by-region, preferably point-by-point, the measurement light transmitted or reflected from each scan region of the second copy is conveyed to a detector arrangement, is analysed into its spectral components, is converted into wavelength-dependent and intensity-dependent electrical measurement signals, the electrical measurement signals are digitised and are evaluated to determine data specific to that print, and by using the print-specific data, the model original image (20; 20aa) matched to the printing material is optimised for the second printing machine (PRa), whereby the data specific to the original image remain unaltered.

3. Process according to one of the foregoing Claims, **characterized in that** the developed first prints are each subjected to an inspection (IS) in which a decision is taken as to whether a second print is prepared from the respective associated original image that is to be printed, and in which if necessary correction values to prepare the second print are determined, and **in that** furthermore the original image to be printed from which the second prints are being prepared together with the respective associated correction values are fed into the second printing machine (PRa) and the correction values are converted in the computing and control unit (4a) of the second printing machine (PRa) into exposure correction values which, together with the data specific to the original image from the first run are employed to determine the amounts of printing light to prepare the respective duplicate print.

**4.** Process according to one of the foregoing Claims, **characterised in that** measurement signals resulting from the spectral measurement of the original image to be copied in the first run and afterwards digitised are subjected to a preferably orthogonal transformation and/or data compression, preferably the Karhunen-Loève transformation, and **in that** the transformation coefficients resulting from this transformation form the data specific to the original image that is used both as input parameters for the model original image (20; 20a) during the first run on the first printing machine (PR) and also as the input parameters for the model original image (20, 20aa) during the second run on the second printing machine (PRa).

**5.** Process according to one of the foregoing Claims, **characterised in that** production negatives are used on the first printing machine for the initial test procedure to calibrate the second printing machine (PRa).

**Revendications**

**1.** Procédé de réalisation de copies photographiques d'originaux photographiques à copier, dans lequel des premières copies photographiques des originaux photographiques à copier sont réalisées au cours d'un premier passage, dans un premier copieur photographique (PR), et dans lequel des deuxièmes copies photographiques nécessaires sont réalisées au cours d'un deuxième passage, dans un deuxième copieur photographique (PRa), le premier passage au moyen du premier copieur (PR) comprenant les étapes de procédé suivantes :

a) l'original à copier est balayé, dans un poste de mesure (1) du premier copieur, par zones, de préférence point par point ;

b) la lumière de mesure transmise ou réfléchie par chaque zone balayée de l'original à copier, est acheminée vers un dispositif de détection (2), décomposée de manière spectrale et transformée en signaux électriques de mesure dépendant de la longueur d'onde et de l'intensité ;

c) les signaux électriques de mesure sont numérisés et exploités pour déterminer des données spécifiques de l'original ;

d) à l'aide des données spécifiques de l'original déterminées et à l'aide d'un modèle d'original (20 ; 20a) adapté au matériau de copie, qui est représentatif du comportement du matériau de copie (F) en cas de variations de la composition spectrale de l'original à copier (N), on détermine, dans une unité de calcul et de commande (4) du premier copieur (PR), les quantités de lumière de copie nécessaires pour l'insolation,

e) à partir des quantités de lumière de copie déterminées, on détermine des signaux de commande pour des filtres couleurs et des obturateurs (7) prévus dans le poste de copie (5) du premier copieur (PR), qui sont introduits dans le parcours des rayons de copie en fonction des signaux de commande, au moment de la copie de l'original à copier (N) sur le matériau de copie (F) ;

f) les premières copies réalisées de cette façon sont développées dans un poste de développement (PP), **caractérisé en ce que** le deuxième copieur (PRa) est étalonné au moyen d'un procédé d'étalonnage sur le premier copieur (PR), le procédé d'étalonnage comprenant les étapes de procédé suivantes :

g) les données spécifiques de l'original, déterminées au cours du premier passage, au moyen du premier copieur photographique (PR), sont acheminées vers une unité de calcul et de commande (4a) du deuxième copieur (PRa) ;

h) à l'aide des données spécifiques de l'original et à l'aide d'un modèle d'original (20 ; 20a) adapté au matériau de copie, qui est représentatif du comportement du matériau de copie (Fa) en cas de variations de la composition spectrale de l'original à copier (N), on détermine, dans l'unité de calcul et de commande (4a) du deuxième copieur (PRa), les quantités de lumière de copie nécessaires à l'insolation ;

i) à partir des quantités de lumière de copie déterminées, on détermine des signaux de commande pour des filtres couleurs et des obturateurs (7a) prévus dans le poste de copie (5a) du premier copieur (PRa), qui sont introduits dans le parcours des rayons de copie en fonction des signaux de commande, au moment de la copie de l'original à copier (N) sur le matériau de copie (Fa) ;

j) les deuxièmes copies réalisées de cette façon sont développées dans un poste de développement (PPa) puis sont soumises à une analyse ;

k) sur la base de l'analyse, le modèle d'original (20 ; 20aa) adapté au matériau de copie est optimisé pour le deuxième copieur (PRa), jusqu'à ce que les deuxièmes copies soient sensiblement identiques aux premières copies.

**2.** Procédé selon la revendication 1, **caractérisé en ce qu'**au cours du procédé d'étalonnage pour étalonner le deuxième copieur (PRa) sur le premier copieur (PR), les deuxièmes copies développées sont balayées par zones, de préférence point par point, la lumière de mesure transmise ou réfléchie par chaque zone balayée des deuxièmes copies est acheminée vers un dispositif de détection, décomposée de manière spectrale, transformée en signaux électriques de mesure dépendant de la longueur d'onde et de l'intensité, les signaux électriques de mesure sont numérisés et sont exploités pour déterminer des données spécifiques de la copie, et à l'aide des données spécifiques de la copie, on optimalise le modèle d'original (20 ; 20aa) adapté au matériau de copie pour le deuxième copieur (PRa), les données spécifiques de l'original, déterminées au cours du premier passage, restant inchangées.

**3.** Procédé selon l'une des revendications précédentes, **caractérisé en ce que** les premières copies développées sont soumises chacune à une inspection (IS) au cours de laquelle il est décidé si une deuxième copie de l'original à copier correspondant respectif est réalisée et au cours de laquelle on détermine éventuellement des valeurs de correction pour la réalisation de la deuxième copie, **en ce qu'**en outre les originaux à copier, dont les deuxièmes copies ont été réalisées, ainsi que les valeurs de correction correspondantes respectives sont envoyées au deuxième copieur (PRa), et les valeurs de correction sont transformées dans l'unité de calcul et de commande (4a) du deuxième copieur (PRa) en valeurs de correction d'insolation, lesquelles sont utilisées avec les données spécifiques de l'original provenant du premier passage, pour déterminer les quantités de lumière de copie pour la réalisation de la deuxième copie respective.

**4.** Procédé selon l'une des revendications précédentes, **caractérisé en ce que** les signaux de mesure résultant de la mesure spectrale de l'original à copier au cours du premier passage, et numérisés ensuite sont soumis à une transformation de préférence orthogonale ou compression des données, de préférence à la transformation de Karhunen-Loève, et **en ce que** les coefficients de transformation résultant de cette transformation forment les données spécifiques de l'original qui sont utilisés aussi bien comme grandeurs d'entrée pour le modèle d'original (20 ; 20a) au cours du premier passage dans le premier copieur (PR) que comme grandeurs d'entrée pour le modèle d'original (20 ; 20aa) au cours du deuxième passage dans le deuxième copieur (PRa).

**5.** Procédé selon l'une des revendications précédentes, **caractérisé en ce que** pour le procédé d'étalonnage du deuxième copieur (PRa) sur le premier copieur (PR) on utilise des négatifs de production.

*Fig. 1*

$\triangle e$

$+$

$-$

$\triangle f$

20;20a

Papierbezogenes
Film-Modell

$\triangle k$

$\triangle b$

Papier-Modell

10;10a

$\triangle d$

*Fig. 2*

_Fig. 3_

Fig. 4

EP 0 825 481 B1

S1 — Bestimme Anfangswert für
Belichtungs-Matrix

S2 — Optimiere Inv. Papiermodell
unter Verwendung der aktuellen
Belichtungs-Matrix

S3 — Optimiere Belichtungs-Matrix
unter Verwendung des aktuellen
Inv. Papiermodells

S4 — Sind
$E_F$ und $E_P$
klein genug?

Nein

Ja

**Fig. 5**

## _Fig. 6_

Nichtlinearitäten

Papier-Matrix P

400
$g_Y(\Delta e_B)$

401
$g_M(\Delta e_G)$

402
$g_C(\Delta e_R)$

P

## _Fig. 7_

INP

Inverse Papier-Matrix P⁻¹

Inverse
Charakteristische
Kurven

P-1

403
$g_Y(\Delta e_B)^{-1}$

404
$g_M(\Delta e_G)^{-1}$

405
$g_C(\Delta e_R)^{-1}$

N

N-MP

F-MP

OLD-MS

OLD-MP

F

F-MP

*Fig. 8*